Europäisches Patentamt

European Patent Office

Office européen des brevets

(19)

(11) **EP 0 790 849 B1**

(12) **EUROPEAN PATENT SPECIFICATION**

(45) Date of publication and mention
of the grant of the patent:
**26.03.2003 Bulletin 2003/13**

(51) Int Cl.$^7$: **B01D 11/04**, B01D 61/28,
G01N 1/40

(21) Application number: **95934715.4**

(86) International application number:
**PCT/GB95/02489**

(22) Date of filing: **20.10.1995**

(87) International publication number:
**WO 96/012541 (02.05.1996 Gazette 1996/20)**

(54) **METHOD AND APPARATUS FOR DIFFUSIVE TRANSFER BETWEEN IMMISCIBLE FLUIDS**

VERFAHREN UND VORICHTUNG FUR DIFFUSIONSAUSTAUSCH ZWISCHEN NICHT
MISCHBARE FLÜSSIGKEITEN

PROCEDE ET APPAREIL DESTINES AU TRANSFERT DIFFUSIBLE ENTRE DES FLUIDES NON
MISCIBLES

(84) Designated Contracting States:
**AT BE CH DE DK ES FR GB GR IE IT LI LU MC NL
PT SE**

(30) Priority: **22.10.1994  GB 9421313
10.06.1995  GB 9511813
12.06.1995  GB 9511904**

(43) Date of publication of application:
**27.08.1997  Bulletin 1997/35**

(73) Proprietor: **CENTRAL RESEARCH
LABORATORIES LIMITED
Hayes, Middlesex, UB3 1HH (GB)**

(72) Inventors:
• **HOLMES, Robert, George, Godfrey
Lancashire PR4 3DS (GB)**
• **BULL, Adrian, James
Manchester M28 2UR (GB)**
• **SIMPER, Adrian, Mark
Cambridge CB4 1HX (GB)**

• **SHAW, John, Edward, Andrew
Hayes Middlesex UB3 1HH (GB)**
• **BRENNAN, David, Edward
Hayes Middlesex UB3 1HH (GB)**
• **TURNER, Robert, Edward
Hayes Middlesex UB3 1HH (GB)**
• **SIMPSON, Richard, Iain
Middlesex UB3 1HH (GB)**
• **WESTWOOD, Lyn
Preston PR1 0NL (GB)**

(74) Representative: **Harrison, Michael Robert
Harrison Goddard Foote,
Belgrave Hall
Belgrave Street
Leeds LS2 8DD (GB)**

(56) References cited:
DE-A- 2 039 051          DE-A- 3 239 290
FR-A- 2 196 831          US-A- 4 208 284
US-A- 4 789 468          US-A- 5 114 579

## Description

## Field of the Invention

The present invention relates to a method and apparatus for carrying out a process between first and second immiscible fluids, for example solvent extraction from one fluid to another.

## Background Art

In the chemical industry a common technique for purifying or analysing chemicals is an exchange process. Solvent extraction relies upon the preferential transfer of one or more components from one phase (fluid) in which the component (solute) is dissolved into a second immiscible phase. Usually this is accomplished by physical mixing followed by separation of the two phases using gravity. It has been found that the more thoroughly the two phases are mixed, the more rapidly the transfer process proceeds by reason of the greater surface area of the smaller globules of liquid and reduced diffusion distances within the phases. The time for separation of the phases however increases with more thorough mixing, and hence for a desired efficiency of solute transfer, the separation time may become unacceptably long, this being the principal disadvantage of the process.

US-A-3,758, 404 discloses the transfer of a component of a liquid into another liquid by causing one liquid to flow as a film along the surface of fibre, while causing the other liquid to flow into contact with the film. Whilst the method reduces to some extent the problem of separation of the two liquids, the liquids are discharged together and it is still necessary to perform a subsequent gravitational separation. Further improvements are desirable in terms of speed and efficiency of the extraction process and the subsequent separation process.

FR-A-2196831 discloses the use of a hydrophobic porous membrane for separating for separating an organic part of an emulsion of organic and aqueous solutions. Pressure is applied so that the organic part of the emulsion flows through the pores of the membrane whereas the membrane forms a barrier to the aqueous solution. However the separation of an emulsion into two pure components is inherently difficult, and the method disclosed can only provide an approximate separation.

US-A-4208284 (Pretorius et al) describes an apparatus suitable for performing a process between first and second immiscible fluids by mass transfer. The apparatus comprises a series of porous open structures formed from foam like material and is suitable for use in chromatography columns, countercurrent extractors and distillation processors.

Porous membranes are used in a variety of situations, e.g. blood dialysis, liquid/liquid extraction in mixer-settlers, centrifugal extractors, see for example DE-A-3239290, DE-A-2039051 and EP-A-246061. The problems with such systems are in general that the liquids are essentially static at the interface with the pores of the membrane creating stagnant regions and inefficiencies in the solvent extraction process. In particular, these disadvantages are exhibited in US-A-5114579, which discloses a membrane situated between two channels, one carrying an aqueous solution and the other a hydrocarbon solvent which permeates the membrane.

## Summary of the Invention

It is an object of the present invention to provide a method and means of bringing first and second immiscible fluids in contact with one another for interaction, while inhibiting physical mixing of the fluids, to permit easy separation of the fluids subsequent to interaction.

In one aspect, the present invention provides apparatus for carrying out a process of diffusive transfer between first and second immiscible fluids, said apparatus comprising first and second flow paths for permitting laminar fluid flow of respective first and second immiscible fluids therethrough, portions of the flow paths being disposed adjacent one another and communicating with one another in a region which is such as to permit the fluids to form a stable open interface therein, wherein at least the first flow path in the interface region has a width normal to the interface within the range 10 to 500 micrometres, and wherein regions of said first and second flow paths outside of said interface region are separated to permit flow of the respective first and second fluids into and out of the interface region without mixing.

For fluid flow paths in the interface region, there are three dimensions of particular relevance, namely the length dimension in the direction of fluid flow, the height dimension in the plane of the interface and normal to the length dimension, and the width dimension normal to the interface. By "normal" is meant perpendicular or orthogonal.

In a further aspect, the present invention provides a method of carrying out a process of diffusive transfer between first and second immiscible fluids, said method comprising:

1) providing first and second flow paths having portions disposed adjacent one another and communicating with one another in a region in which the fluids can contact one another and wherein at least the first flow path in the interface region has a width normal to the interface within the range 10 to 500 micrometres;

2) flowing the first and second immiscible fluids through said respective first and second flow paths such that, at least in said region, the flow of both fluids is essentially laminar, and a stable open interface is formed between the fluids;

3) permitting transfer of at least 1% of the total amount of at least one diffusive entity at said interface between the two fluids; and

4) flowing the fluids into and out of the interface region in their respective flow paths without mixing of the fluids.

Thus in accordance with the invention a speedy and highly efficient method and means is provided for carrying out desired processes, since first and second immiscible fluids are brought into contact with one another for the carrying out of the process under closely controlled conditions, while preventing the two fluids from forming a mixture which would subsequently require separation.

In the interface region, the flow paths are close to or adjacent one another so that fluid flow through the flow paths continually replenishes the fluid at the interface. An arrangement where flow at the interface parallel to the interface is prevented or restricted, as for example in the pores of a conventional membrane, provides less favourable conditions for interphase transport as the non flowing fluid held in the membrane pores extends the distance for diffusion of the transferring entity. Additionally such stagnant regions can accumulate debris and undesirable products which may interfere with interphase transport. For optimum fluid dynamics, the fluids should be brought together into contact with parallel or non-intersecting flow directions; the flow paths may be spaced apart so long as there remains a significant component of fluid flow at the interface.

Any type of flow path or channel may be employed so long as it is capable of retaining fluid for fluid flow, for example a conduit, pipe, tube, gutter, groove, slit, bore or any other type of via or passageway.

The two immiscible fluids will commonly be liquids, for example an aqueous solution and an organic solution. However, one or other of fluids may be a gas or a supercritical fluid, so long as the two fluids are immiscible with each other.

Any type of interaction may be envisaged between the two fluids, and although solvent extraction has been mentioned, other interactions may take place, for example heat transfer, transfer of light energy, and chemical reactions of any nature including titration, and preconcentration or sampling required for a variety of measurement techniques. These may include processes such as electrophoresis and chromatography which may be carried out within microengineered or other structures which may conveniently linked to the apparatus or fabricated by similar means, possibly using the same substrate. The apparatus may also be employed in biological, biomedical and biotechnical applications, for example where streams of genetic or other biological material are entrained into fluids and desired exchange, addition, or binding processes takes place therebetween. A common feature in many such processes is that the rate of interfacial transfer is substantially controlled by the rate of diffusive transfer of an entity within each phase to and from the interface.

Thus, the present invention is based upon the concept of providing a method and means by which (1) immiscible fluids are brought together and rapidly separated without having formed a physical mixture, and (2) the concentration of one or more components (entities) dissolved or otherwise contained in one or both phases is substantially changed by a process involving transfer between phases and diffusive transport in one or more of the phases.

By "entity" is meant a substance dissolved in one fluid, and also includes heat, electric charge and any other component or parameter being capable of transfer between the two fluids by diffusive transport mechanisms in the two fluids.

With the present invention, an interface is defined at which the fluids contact one another under defined conditions so that the interface remains stable despite movement of the fluids. Turbulence should not be present at the interface in an amount sufficient to disrupt the interface.

In order to be governed by surface tension, the dimensions of the interface and the nature of the interface contact with the surrounding structure have to be considered as will become clear hereinbelow.

For efficiency of operation, portions of the fluids should remain in contact with one another in the interface region for a short time so that throughput of fluids can be maximised. The continual renewal of the fluids at the interface has the additional advantages that degradative side reactions between the fluids and their dissolved components, such as hydrolysis of extractant chemicals, is reduced, as is also the accumulation of undesirable products at the interface. In accordance with the invention, the fluid portions should desirably remain in contact with one another for a period of the order of between 1 and 100 seconds, or more generally between 0.1 and 100 seconds.

So far as concerns processes involving diffusive transfer across the interface, a substantial changing of component concentration between the fluids requires that portions of the fluids occupy positions in the interface region sufficiently long for diffusion of the required component to take place across the interface. As the constraints required to produce a stable interface require formation of a laminar flow region adjacent to the interface, transport normal to the flow direction is usually by molecular migration processes, most generally diffusive. For substantial diffusive transport to occur within a short contact time (of the order of 1 - 100 seconds), the extent of the dimension for the first fluid orthogonal to the interface through which transport occurs is limited to distances of the order of those which may be traversed by diffusion of the transferred entity within the contact time. Other forms of transport may also take place, for example movement of charged species along an electrical field gradient across the interface.

Thus a principal factor in determining the cross-sectional dimensions of the flow paths is the diffusion coefficients of the transferring entity within the first and second fluids. In general, the rate of transfer of the entity across the interface will depend on the diffusion coefficients of the transferring entity in both fluids. The situation is somewhat analogous to electrical current flow through two series resistors, where the sum resistance has to be considered in determining resultant current flow.

In an extreme case, where the diffusion coefficient for the second fluid is very high, e.g. a gas, then the rate of diffusion in the second fluid will not be a significant factor, and essentially only the diffusion coefficient of the first fluid need be considered, and hence only the width of the first fluid flow path. At the other extreme, the diffusion coefficient for the second fluid may be very low, so that it effectively forms a barrier for diffusion across the interface, in which case a long time interval will be required for significant diffusion, the width of the second fluid flow path not being a significant factor.

It has been realised that in accordance with the invention, the invention can be expressed more precisely making use of a mathematical variable that is known in general terms. For systems proceeding towards an equilibrium distribution of material by diffusion the progress is a function of diffusion coefficient *D,* time *r,* and the geometry and dimensions of the system ,which may be represented by a characteristic length *l,* in the direction of diffusive transport. It can be shown the evolution of diffusion processes may be described in terms of a dimensionless variable $D.t/l^2$, (see. The Mathematics of Diffusion - J. Crank - Second Edition 1975, Oxford University Press)

For significant diffusion to take place in accordance with the invention, there should occur transfer of at least 1%, and preferably 50% or more, of the transferable entity which could be transferred through contact of the fluids for very long periods in the absence of degrading side processes.

In accordance with the invention, if $Dt/l^2>0.01$ transfer will generally amount from 1% to 10% of the maximum at equilibrium, while if $Dt/l^2>0.1$ transfer will be of the order of 50% or more. Thus from the diffusion coefficients of transferring components and the desired transfer times it is possible to determine the appropriate system dimensions. The diffusion coefficients depend on species, medium and temperature, but for small to moderate size molecules in liquid media, the value of *D* tends to be of the order $10^{-9}$ to $10^{-11}$ m$^2$s$^{-1}$. Diffusion coefficients in liquid media for high molecular weight species such as some polymers may be substantially lower e.g.$10^{-13}$ m$^2$s$^{-1}$, while coefficients in gases are generally a few orders of magnitude higher. As an example, for rapid ($\sim$1 s.) substantial transfer ($\sim$50%) of

species with diffusion coefficients $\sim$10$^{-10}$ m$^2$s$^{-1}$, the appropriate length *l* for the dimension normal to the interfluid interface should be given approximately by substituting the relevant values for *D* and *t* into $Dt/l^2$, and equating the expression to 0.1. This example gives *l*=32μm, though in practice dimensions in the range 10 to 100 μm may be adequate. It may be seen that generally values for appropriate dimensions calculated using the expression $Dt/l^2$ as described for rapid and substantial diffusive transfer will yield average values in the 10 to 500 μm range for the width dimension in the structures for carrying out transfer between immiscible fluids.

The above expression may be rewritten as:

$$l^2 < D\ tx^{-1}$$

where x is a numerical constant having the values 0.1, 0.01 as set out above, or 0.005 or more.

Thus, in accordance with a further aspect, the invention provides apparatus for carrying out a process of diffusive transfer of an entity from a first to a second fluid immiscible with the first, said apparatus comprising first and second flow paths for permitting laminar fluid flow of respective first and second immiscible fluids therethrough, portions of the channels being disposed adjacent one another and communicating with one another in a region which is such as to permit the fluids to form a stable open interface therein, wherein the width of at least the first flow path adjacent said interface region and normal to the interface is determined by the inequality:

$$l^2 < Dtx^{-1}$$

where D is the diffusion coefficient of the transferring entity within the first fluid, t is a time period between 0.1 and 100 seconds for fluid portions occupying a position in the interface region, and x is a numerical constant having a value of 0.005 or more, and wherein regions of said first and second flow paths outside of said interface region are separated to permit flow of the respective first and second fluids into and out of the interface region without mixing.

In a further aspect, the invention provides a method of carrying out a process of transferring at least one diffusive entity from a first fluid to a second fluid immiscible with the first, the method comprising:

1) providing first and second flow paths having portions disposed adjacent one another and communicating with one another in a region in which the fluids can contact one another;
2) flowing the first and second fluids through said respective first and second flow paths such that, at least in said region, the flow of both fluids is essentially laminar and a stable open interface is formed between the fluids;

3) wherein at least 1% of the total amount of a diffusive entity that may be transferred from the first fluid across the interface is transferred to the second fluid and the following inequality holds:

$$l^2 < Dtx^{-1}$$

where D is the diffusion coefficient of the diffusive entity within the first fluid, t is a time period between 0.1 and 100 seconds in which a portion of the first fluid occupies a position in the interface region, 1 is the width of the first flow path adjacent said interface region and normal to the interface, and x is a numerical constant having a value of 0.005 or more; and

4) flowing the fluids into and out of the interface region in their respective flow paths without mixing of the fluids.

It will be understood that for the purposes of the invention, selection of one fluid as the first fluid and the other as the second fluid is entirely arbitrary, and the aforesaid statements apply equally well to the second fluid. It will commonly be the case that diffusive transport in both fluids is of significance, in which case selection of width dimensions for both the first and second flows will be subject to the same inequality.

It is within the scope of the invention that one flow path or channel be of such dimensions that it effectively forms a static reservoir of fluid for interaction with the fluid flowing in the other channel. However where flow is required in either or both channels, the channels carrying flow should be dimensioned small enough that essentially laminar flow be constrained to take place in the region adjacent to the interface. It is within the scope of the invention that a controlled degree of turbulence be introduced into one or both liquids provided that the interface between the liquids is not unduly disrupted. Disruption of the interface between the fluids by turbulent flows is thus avoided. Where one of the two fluids is a gas, it is acceptable for some moderate degree of turbulence to exist within that fluid close to the interface.

The interfacial region allows transfer of the species without promoting mixing between the two fluids. In most instances it is envisaged that both phases will flow continuously. However there may be some situations where it will prove preferential to pulse one or both of the phases.

In systems of two fluid phases, the stability of the interface is limited by pressure differentials between the two phases. Such pressure differentials will arise from inexactly matched pressure gradients in the direction of flow arising from differences in channel dimensions and fluid viscosities. The dimensions over which the interface can stably sustain a non zero pressure differential are limited by interfacial tension between the two phases, and wettability of the channel wall materials by the two phases. It is possible to stabilise the interface by control of the operating dimensions and adjacent solid surfaces.

For stabilising an open interface between fluids, the two channels or channels may be formed of different substances (for example glass, silicon, steel, polypropylene, nylon) with different wetting properties, or contouring the surfaces in the region of the interface, and in particular narrowing the interface to restrict the lateral dimensions of interfluid contact, or by using a combination of the factors. By arranging a change of surface type or geometry at or within an opening between channels it is possible to pin, or restrict movement of the contact of the interfluid interface with solid surfaces so that for a definable interval of pressure differential across the interface there is no, or very little movement of that contact. How this may practically be achieved will be described more fully below.

It is possible that the dimensions of the interface be much less than those of the channels, for example a narrow slit or slits, or array of apertures piercing a wall between two channels running side by side. However it will preferably be the case in accordance with the invention that the width of the interface be the same as or not less than, say, one twentieth of the corresponding dimension of the channel to ensure that as large an interface as possible in relation to the amounts of fluid present is available to ensure speedy interaction at the interface.

Various configurations of interface region may be envisaged. For example in one preferred embodiment, the channels or flow paths may run side by side over a considerable length with the interface extending over the whole or a major part of that length. In another preferred embodiment, the two channels may be disposed in parallel planes and each have a zigzag or convoluted configuration. At points where the two channels overly one another, an interface is formed so that the desired interaction between the two liquids takes place over a number of openings.

So long as an interface region is formed between the two channels, the two channels may run in any direction relative to one another in three dimensions. Thus in a multiple channel system, one may envisage a three-dimensional gridlike structure with multiple connections of one channel with channels in different planes.

The first and second channels or flow paths may be formed by assembly or superposition of substrates in which features defining passageways for fluids are etched, impressed, cut or otherwise formed as grooves, or other structures such as ridges, open sided channels or conduits or tubes, extended indentations, gutters, gouges or scratches in the surface of a substrate, or as slits or vias through substrate lamina or gaskets enclosed by other substrate layers. The substrates may be of plane laminar form, or may be more complex three dimensional structures including rods or other prismatic structures inserted or filled into holes or bores within and possibly passing through substrate blocks, or formed on the surface of substrate blocks, and including threaded rods fitted into such holes or bores where those holes and bores may if desired have corresponding threads. Such rods, bores and threaded structures may bear such grooves , ridges or other structures as are required to allow an assembly of the subunits formation of channels with interfluid contact regions.

The dimensions of the channels are compatible with microengineering methods; suitable methods include chemical etching, electroplating, laser machining and the use of photo-processable glasses; specific methods are described below .

Where it is desired to process more than two immiscible fluids, various configurations may be envisaged for coupling together the various channels. In one arrangement, two channels may form an interface region for a first interaction between first and second fluids, and downstream of this region a further interface is formed with a third channel for allowing a third fluid to interact with the first or second fluid. In another arrangement, three channels may form interfaces with each other in a common area so that a desired component can undergo successive transports from a first fluid to a third fluid via the second fluid. Any number of fluids can in principle be processed in accordance with the invention.

In an arrangement where a second fluid path carrying a second fluid has fluid paths on opposite sides forming separate interfaces with the first fluid path, then the width of the first fluid path may be wider than the aforesaid limits, in fact twice as wide, whilst still preserving adequate diffusion, since diffusion may take place in the first fluid in two opposite directions to the two opposite interfaces. Thus in general, where the second fluid flow path is formed such that there exists in the interface region more than one interfacial area between the first and second fluids, then the first fluid flow path is such that none of the first fluid flow path lies further in the interface region than (i) between 10 and 500 micrometres from the closest interfacial area , or (ii) a distance ($l$) determined by the inequality $l^2 < D.t.x^{-1}$, where the symbols have the meaning ascribed as aforesaid..

When it is required to process relatively large quantities of liquid or in other circumstances of complex processing as explained more fully below, it is possible to employ large numbers of fluid flow paths forming large numbers of interface regions , each interface region being herein termed a process element, so that large numbers of miroscopic quantities of fluids may be processed simultaneously. Large numbers of the apparatus according to the invention may be manufactured very inexpensively, and it is therefore a practical solution to processing large quantities of liquid.

Accordingly there is provided in a further aspect of the invention, a system for processing quantities of first and second immiscible fluids, including a multiplicity of process elements, each process element comprising apparatus comprising first and second flow paths for permitting fluid flow of respective first and second immiscible fluids therethrough, portions of the flow paths being disposed close to or adjacent one another and communicating with one another in a region which is such as to permit the fluids to form a stable open interface therein, and wherein at least the first flow path in the interface region has a width normal to the interface either (i)within the range 10 to 500 micrometres, or (ii) a distance ($l$) determined by the inequality $l^2 < D.t.x^{-1}$, where the symbols have the meaning ascribed as aforesaid.

In a yet further aspect of the invention, there is provided a method of carrying out a process between first and second immiscible fluids, the method comprising:

1) providing first and second flow paths having portions disposed adjacent to or close to one another and communicating with one another in a region in which the fluids can contact one another;
2) flowing the first and second immiscible fluids through respective said first and second flow paths such that, at least in said region, the flow of both fluids is essentially laminar, and a stable open interface is formed between the fluids;
3) permitting significant transfer of a desired entity at said interface between the two fluids;
4) flowing the fluids away from the interface region in their respective flow paths without mixing of the fluids; and
5) wherein said interface region forms a single process element, and providing a multiplicity of such process elements which enable simultaneous processing of the fluids within each process element.

## Brief Description of the Drawings

Preferred embodiments of the invention will now be described with reference to the drawings wherein :-

Figures 1a and 1b are schematic plan views of a first embodiment, with Figure 1b showing cross sectional views of channels at lines A-A and B-B of Figure 1a;
Figure 2a and 2b are schematic plan views of a second embodiment of the invention, with Figure 2b showing cross sectional views of channels at lines A-A and B-B of Figure 2a;
Figures 3a and 3b are schematic plan view of a third embodiment of the invention; with Figure 3b showing cross sectional views of channels at lines A-A and B-B of Figure 3a;
Figure 4 to 6 are schematic views of arrangements for fixing the position of the liquid interface at a desired position between the channels;

Figure 7 is a diagram illustrating the method for forming the embodiments described above;

Figures 8a and 8b are diagrammatic perspective and sectional views of of a fourth embodiment of the invention;

Figures 9a and 9b are schematic plan views of a fifth embodiment of the invention, with Figure 9b showing cross sectional views of channels at lines A- A and B-B of Figure 9a;

Figure 10 is a schematic view of a sixth embodiment of the invention, incorporating electrode structures;

Figures 11a to 11f are schematic views of embodiments involving multiple channels and interface regions;

Figure 12 shows a further embodiment of the invention involving two channels with multiple interface regions ;

Figure 13 is a schematic diagram of a further embodiment of the invention employing a multiplicity of process elements in a series/ parallel configuration, with Figure 13a showing fluid flow paths in separate substrates and Figure 13b showing the substrates and flow paths superimposed to form process elements; and

Figure 14 is a schematic diagram of an exploded perspective view of a final embodiment of the invention employing a multiplicity of process elements in a parallel flow arrangement.

### Description of the Preferred Embodiments

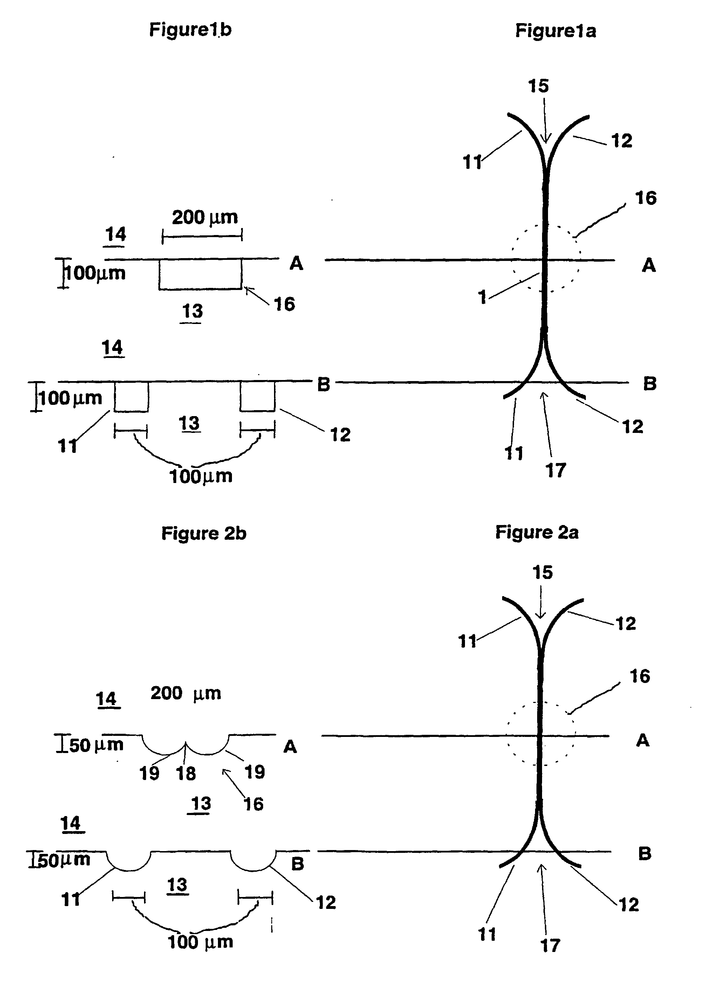

Referring now to the first preferred embodiment of the invention shown in Figure 1, there is shown a first channel 11 and a second channel 12 formed in a silicon substrate 13. The upper surface of the channels is closed by a glass plate 14 which is bonded to the silicon substrate 13. As shown, the channels have curved converging inflow regions 15, extend parallel and adjacent to one another in a contact region 16 which has a length of about 500 microns, and have curved diverging outflow regions 17. In the contact region 16, the dividing wall between the channels is removed so that the cross section is, as shown in Figure 1b, a simple rectangle with a width of 200 microns and a height of 100 microns, whereas the cross sections of the channels in the converging and diverging regions are square, having a width of 100 microns and a height of 100 microns.

In use, a first liquid flowing under conditions of laminar flow through the first channel 11 is brought into contact with an immiscible fluid flowing under conditions of laminar flow in second channel 12. A stable open interface formed between the two liquids in the contact region 16 provides a means by which a diffusive process takes place, for example mass transfer (solvent extraction) of solute from one liquid to the other.The conditions are such that at least 1% of the solute present in the one liquid diffuses across the interface to the other liquid.

The liquids subsequently flow away from the interface region , without mixing, in outflow regions 17.

Referring now to Figure 2, the second embodiment is similar to Figure 1 and similar parts are denoted by similar reference numerals. However, the cross-sections of the channels are modified to approximate semicircular recesses with a width of 100 micrometres and a depth of 50 micrometres. Contact region 16 is modified in that it has the cross section indicated in Figure 2b with a central ridge 18, the cross section being curved with two minima 19 at a depth of 50 microns below the surface of the substrate and 50 microns in from the walls of the contact region, and a central maximum at ridge 18, 25 microns above the minima. With this variation in cross section, as more fully described below, the interface stability is improved in the contact region so as to ensure that conditions for stable contact between the two fluids can be set up without physical mixing of the first and second fluids.

In the embodiments of Figure 1 and Figure 2, the interface length is shown as 500 micrometres. However, it can be greater than this, as long as 1mm or even up to 2cm in order to create an adequate contact time between the two liquids.

Where immiscible fluids are to be brought into contact and then separated, it is necessary that the geometry of the fluids and the interface be constrained. It is a commonplace observation that where layer thicknesses are sufficiently large, of the order of centimetres, then fluid phase geometries and interface position is generally dominated by gravitiational body forces, with the less dense fluid overlying the more dense, and the plane of the interface being substantially at right angles to the direction of the gravitational field. For the range of density differences and interfacial tensions conventionally accessible for immiscible fluids, including liquid/ gas systems, the surface tension effects tend to become dominant for dimensions below a few millimetres, and are substantially controlling for the layer thicknesses in the 10 to 500 micrometre range of interest for application of the present invention. Thus for the layer dimensions appropriate for rapid diffusive transport, the inter-fluid interface position is largely controlled by surface tension effects such as interfacial tension and contact angles. Employing these effects to achieve desired interface positions requires the use of selected structures and dimensions, and of materials with selected contact angle ranges. Pinning interface position may be achieved by provision of constrictions, and by changes in contact angle and by combinations of these factors.

In order for fluids to flow it is necessary to provide pressure gradients through the fluid paths, and it is inevitable that some pressure differentials arise across the interface. It is desirable to allow interface curvature to develop to support such pressure differentials as will arise during their use without excessive occlusion of the pathway for one fluid by another, and without formation of droplets or bubbles of one fluid within another. This may be achieved by means of constrictions and/ or material surface changes as described below.

As the two solvents employed may often be water and a hydrocarbon solvent, it is possible to stabilise the interfacial region by forming one channel from material with a hydrophobic surface, and the other from a material with a hydrophilic surface, or by coating one channel with a hydrophobic layer and the other with a hydrophilic layer. The flow of water will then naturally tend to be confined to the hydrophilic side of the contact region, and that of the hydrocarbon solvent to the hydrophobic side.

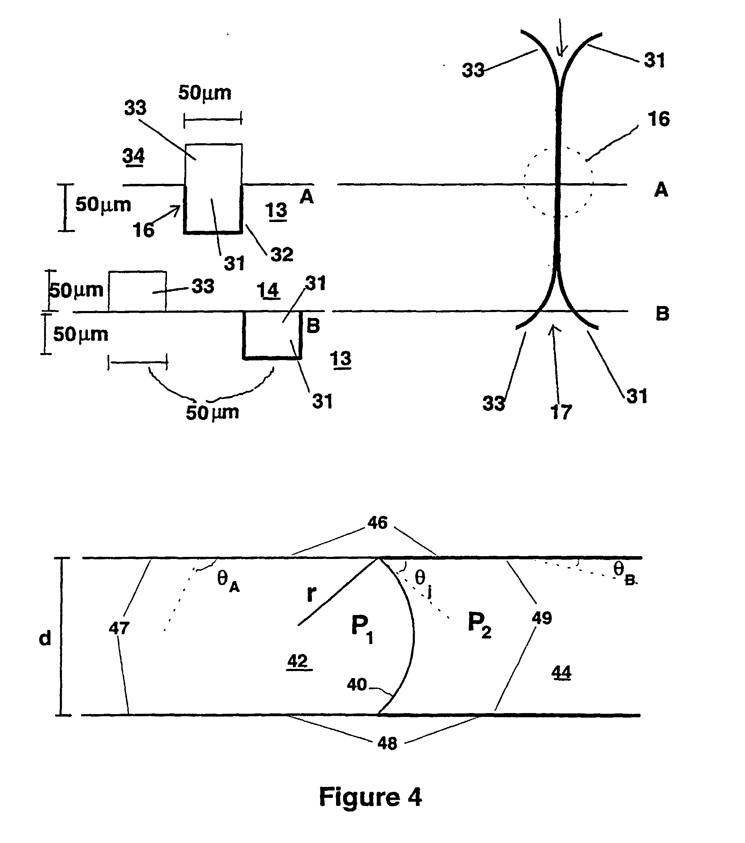

Referring now to Figure 3, the third embodiment is similar to the first and second embodiments in many respects and similar parts are denoted by similar reference numerals. A major difference is that a first channel 31 is formed in a lower silicon substrate 13 and has coated on its inner surface a coating 32 of a hydrophobic material. A second channel 33 is formed in an upper glass substrate 34 and its surface is naturally hydrophilic. As can be seen in Figure 3b, in the contact region 16, the first and second channels are superimposed one above the other so that the interface region extends horizontally therebetween. Each channel is shown as a simple rectangle 50 micrometres square, but may in another example be hemispherical.

The conditions existing at the interface region of Figure 3 are shown more precisely in Figure 4 which represents a cross-section through the interface 40 of two liquids 42, 44 flowing perpendicular to the plane of the paper and confined by parallel walls 46, 48 separated by a distance d sufficiently short that the influence of gravity may be neglected, as stated above, where the wall material or surface 47, 49 is different either side of the desired interface position. In Figure 4, the two liquids have pressures $P_1$ and $P_2$ respectively, and the interface 40 has a radius of curvature r. The difference in pressure $\Delta P = (P_1 - P_2)$ is inversely proportional to the radius of curvature and for an interface between the two liquids which is elongated in the direction of flow can be represented as:-

$$\Delta P = \gamma/r,$$

where $\gamma$ is the interfacial tension for the two fluids.

In addition it may be shown (as stated above the influence of gravity may be neglected) that the condition for a static interface between the two fluids confined between walls at separation d, and where the equilibrium contact angle between the fluid interface and the wall material is $\theta$, is as follows:-

$$\Delta P = \gamma d/(2 \cos \theta)$$

Thus a single value only of pressure differential $\Delta P$ exists for which the interface will be immobile if the wall separation d and contact angle $\theta$ are fixed at single values. Under such conditions it becomes very difficult to fix the interface position at any desired location. In practice hysteresis in the value of the contact angle for real systems can tend to cause the interface to become fixed in position, though not generally where most desired.

In Figure 4, the equilibrium contact angles for the two fluids with surfaces 47 and 49 are represented by $\theta_A$ and $\theta_B$. Between surfaces of material 46 (left of interface position shown in Figure 4), an interface will move unless the pressure differential is $\Delta P_A = \gamma d/(2 \cos \theta_A)$. Similar between surface of material 49 an interface will be mobile for all pressure differentials except $\Delta P_B = \gamma d/(2 \cos \theta_B)$. However at the junction between materials 47 and 49, there will be a change in contact angle, so that an interval of contact angle and pressure differentials will exist for which the interface to solid surface contact position will not change. This pinning condition will be met while the contact angle at the junction of surface types $\theta_J$ lies between $\theta_A$ and $\theta_B$ which corresponds to a finite pressure differential interval. Thus a pinned interface will exist while the pressure differential across the interface $P_1 - P_2$ satisfies the expression:-

$$\Delta P_A < (P_1 - P_2) < \Delta P_B,$$

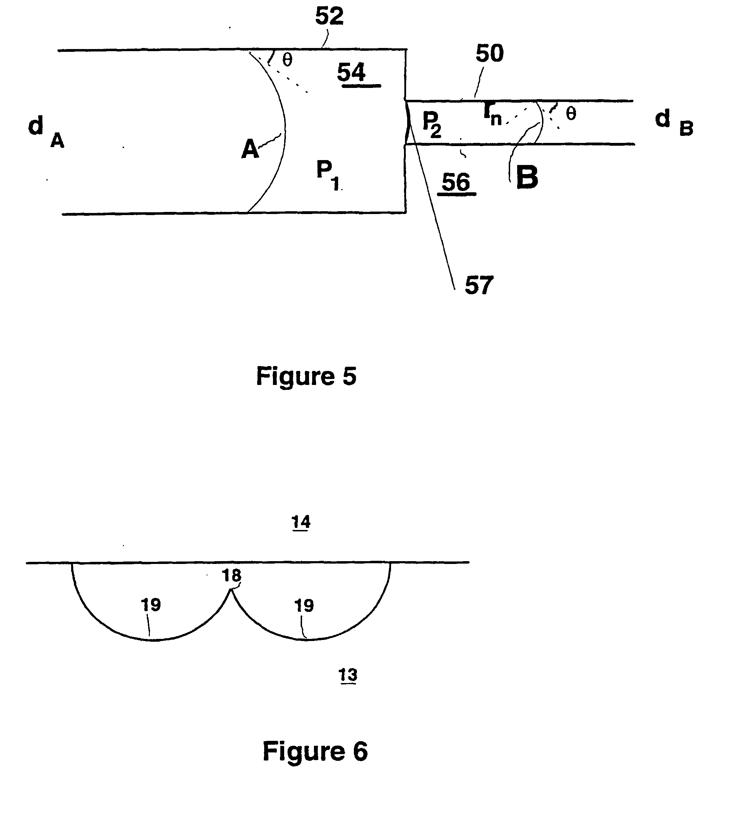

Similarly referring to Figure 5 which represents a cross-section through a junction between two channels 50, 52 of different widths $d_A$, $d_B$ where all walls are taken as being the same material and the equilibrium contact angle $\theta$ does not vary, pressure differentials $\Delta P_A$ and $\Delta P_B$ of fluids 54, 56 in respective channels 52, 50 denote the single values for immobility in the wide and narrow sections. At the entry 57 to the narrow section a pressure interval for pinning exists given by:

$$\Delta P_A = \gamma d_A/(2 \cos \theta) < (P_1 - P_2) < \Delta P_B = \gamma d_B/(2 \cos \theta)$$

For structures formed as indicated in Figure 2 and shown enlarged as in Figure 6 stabilisation is achieved by the narrowing of the interface as indicated but as the interface narrowing is not so abrupt as for Figure 5, there will be some small movement of the interface with pressure variation within the stable boundaries.

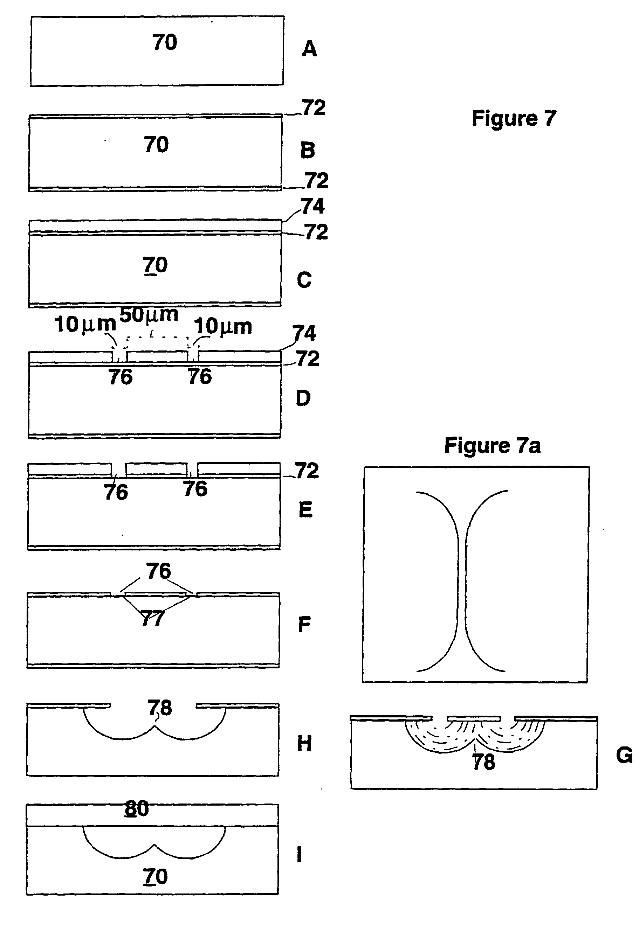

Referring now to Figure 7 there is shown a method of forming the channel structures shown in Figures 2 and 6. In an initial stage A, a silicon substrate 70, 1mm thick is provided. In step B a silicon oxynitride film 72 is grown on both sides of the substrate. In step C a photoresist layer 74 is deposited onto the upper surface of the substrate by a spinning process. In step D, a desired pattern is developed on the photoresist layer 74 by means of a photolithographic process with a positive resist in order to provide the basic channel configuration as indicated by gaps 76 10 micrometres wide with a 50 micrometre spacing..

In step E the silicon oxynitride film 72 is etched as at 77 by plasma etching in order to define the channel positions, and in step F the photoresist layer 74 is removed, leaving etched grooves in the silicon oxynitride film of 10 micrometres width, with a 50 micrometre spacing therebetween, as illustrated in Figure 7a which is a plan view of the structure of F.

As indicated in step G, an isotropic etching process etches away the silicon in gaps 76 so as to create ever widening recesses in the silicon substrate (as indicated in dotted lines), which eventually meet at a central point 78. The etching process continues until as indicated in step H a central meeting point 78 is reached at a predetermined distance beneath the substrate upper surface. This structure is then as illustrated in Figure 2 and Figure 6.

In step I, a glass cover plate 80 is anodically bonded to the surface of the substrate by a known process involving heat, pressure and a high voltage.

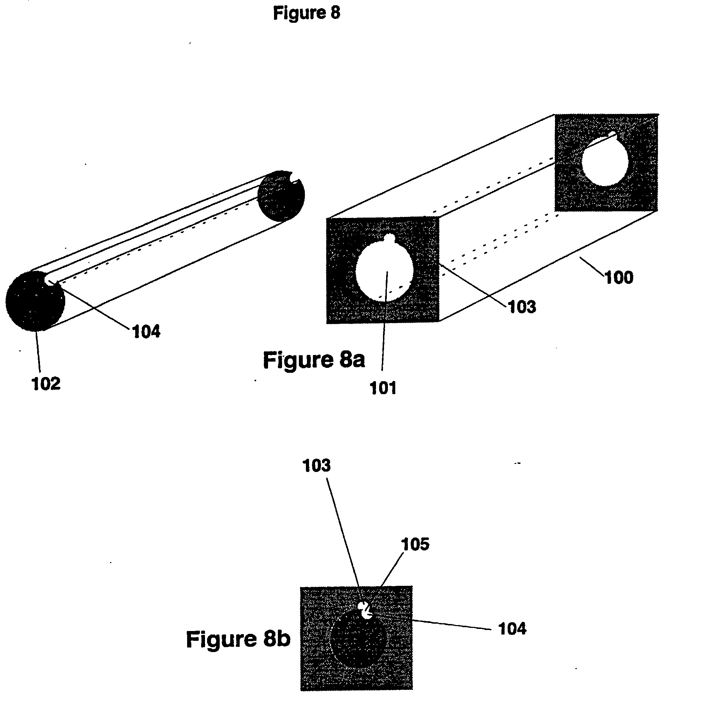

Referring now to Figure 8 a further embodiment of the invention is shown. The embodiment comprises a metal block 100 having a tubular bore 101 therein in which is inserted a mating tubular glass rod 102. The bore 101 has an axially extending recess 103 in its periphery which forms a first fluid flow path. The rod 102 has a similarly shaped recess 104 in its periphery which forms a second fluid flow path. As shown in Figure 8b when the rod is inserted in the bore, the two fluid flow paths define a common interface region 105. As shown the two flow paths are offset from one another so that the interface region extends only over one half the width of the fluid flow paths. This method of forming an interface region 105 which is narrower than that of either of the channels is a simple method of forming the interface region since it depends merely on a geometric displacement of the fluid flow paths, rather than engineering a constriction at the interface region.

Various modifications are possible to the embodiment shown in Figure 8. For example the recesses 103, 104 can be formed as screw threads extending around the surfaces of the rod and bore. Alternatively, a multiplicity of axially extending recesses can be formed in both the rod and the bore, and the rod and bore may be of cross-sections other than the circular form shown in Figure 8.

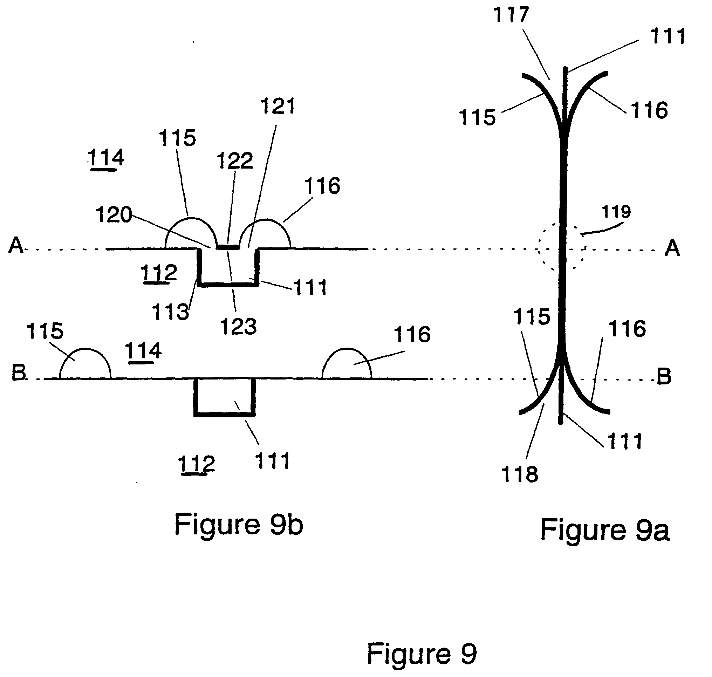

Referring now to the embodiment shown in Figure 9a and 9b, a first fluid flow path 111 is formed in a silicon substrate 112 and has on its inner surface a coating 113 of a hydrophobic substance. An upper glass substrate 114 has second and third fluid flow channels 115, 116 formed therein as semicircular recesses. As shown in Figure 9a, flow path 111 is a straight line whereas second and third flow paths 115, 116 have converging inflow regions 117 and diverging outflow regions 118. In a central contactor region 119 all three flow paths are parallel to one another and as shown in Figure 9b, second and third flow paths 115, 116 partially overlap first flow path 113 and define first and second interface regions 120 and 121. Second and third paths 115, 116 are separated by a land area 122 which has on its surface a hydrophobic coating 123.

Thus it will be appreciated that this embodiment provides a method of bringing immiscible fluids into contact with one another for diffusive transport between the three fluids in the two interface regions 120, 121. The offset arrangement of the flow paths 115, 116 from flow path 111 in the central contactor region provides a simple method of geometrically determining the width of the interface regions 120, 121.

A specific example of a method and apparatus in accordance with the invention will now be given:

EXAMPLE

Geometry of apparatus: A glass layer is bonded to the surface of a silicon sheet. Etched fluid flow channels in the facing surfaces partially overlap to give an interface region. The glass is etched and is 88μm x 37μm deep. The silicon channel is 60μm wide and 53μm deep. The glass and silicon are arranged so there is an overlap of 28μm between the channels and the total length of the interface is 1cm (it is in fact in 4 sections).

Chemistry: An organic phase containing Fe(III) in a mixture of 5% (by weight) Tributylphosphate and Xylene 95% was flowed in one channel of the contactor and a 3M hydrochloric acid flowed in the second channel. Flow rates were controlled using hydrostatic pressure at the inlets. The flow rate of the organic phase was approximately 1cc per day and the aqueous phase approximately half this value. No mixing of the 2 phases was observed. Analysis of the aqueous phase flowing out of the glass channel gave an Fe(III) concentration of 0.035M. For comparison the TBP/Xylene/Fe(III) phase was shaken with 3M HCl in the ratio of 2:1. Analysis of the aqueous phase after the resulting emulsion has separated gave an Fe(III) concentration of 0.16M. The efficiency of the process in the contactor was therefore about 22%.

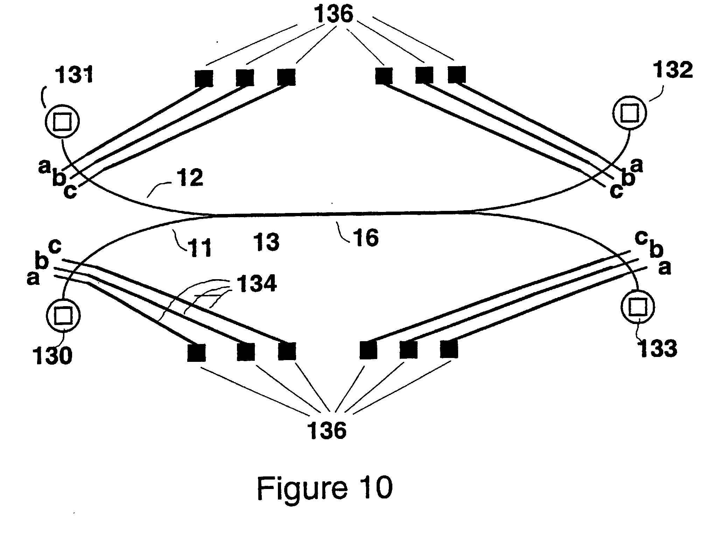

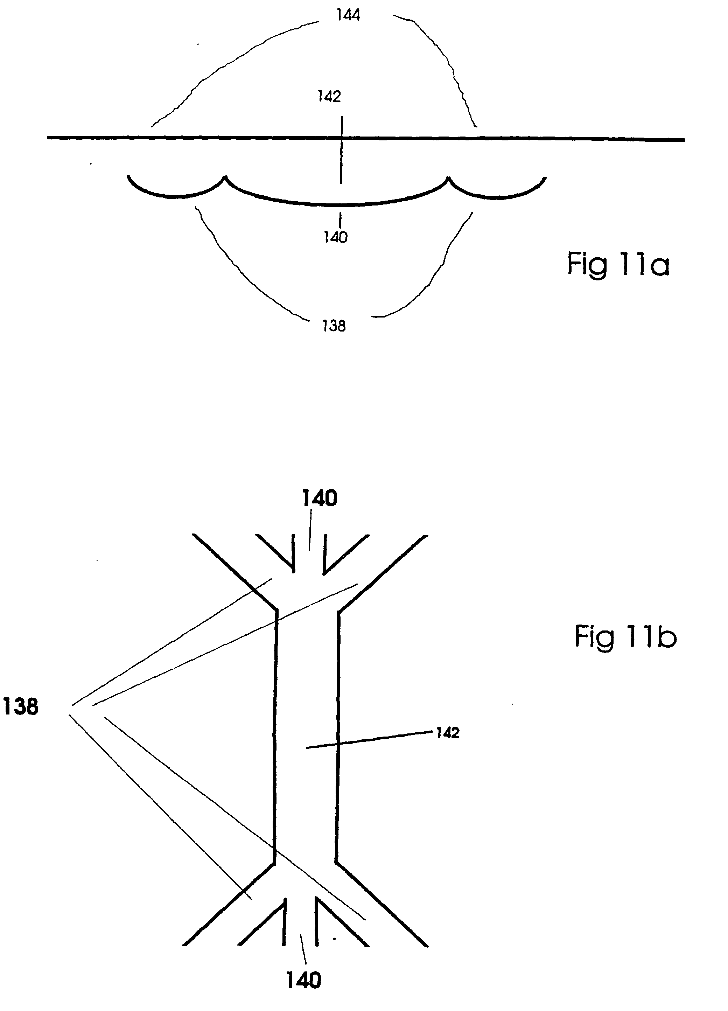

Referring now to Figure 10, a further embodiment of the invention is shown, wherein parts similar to those of Figure 1 are denoted by the same reference numeral. Channels 11,12 have respective input ports 130,131 and output ports 132,133. Adjacent each port are disposed three electrodes a, b, c coupled by leads 134 to terminal pads 136. The electrodes, leads and terminal pads are formed by depositing metal film on the surface of the substrate 13, electrodes a, b being formed by the deposition of platinum and electrode c being formed by the deposition of iridium. In this geometry the conductivity of the solution is determined by the pairs of platinum electrodes a,b whereas the iridium electrodes c are used to determine the local pH by measuring potential relative to a reference electrode (not shown). The platinum electrodes a,b can be used to measure the potential of the solution either relative to that in another arm of the contactor or relative to a reference electrode (not shown). The same electrodes can be used to make amperometric measurement in which the charge required to oxidise or reduce a particular species is determined.

The structures according to the invention may include electrically conducting, semiconducting, or ionically conducting electrode structures or connections which contact the fluid flows. These may be for sensing or monitoring purposes, or for affecting or adjusting parameters which control the function of the contactors e. g. redox conditions affecting partition coefficients. A variety of processes involving electrodes and/or conducting connections are indicated below.

Electrodes or conducting connections may be formed and defined as wires, films or channels on or through nonconducting materials which may form the channel walls or substrates in which the flow paths are formed, or may be part of the substrate materials in which the flow paths are formed, or be largely continuous coatings on such substrate materials. Electrodes or conducting connections may be formed and make contact with the flow paths remotely from the openings in which inter-fluid contact is established, including connections to the fluids via such entry ports of manifolds as are used to introduce or remove the fluids from the contactors, and within channels between such ports and the interface regions. Similarly electrodes or conducting connections may also be formed or positioned in the regions of the flow paths adjacent to, or contacting the inter-fluid interface.

Electrodes or groups of electrodes or conducting connections to the flow paths may be used for sensing the presence of flows and flow rates by various means including conductivity of solutions between electrodes, streaming potentials, and monitoring and/or generating pulses of species within the flows, such as oxidised or reduced ions, bubbles, or particulates including biological cells.

Electrodes or groups of electrodes or conducting connections to the flow paths may be used for sensing and monitoring the presence of various species within the flows by measuring solution conductivity, redox potentials, *pH* and other concentration related potentials, or by carrying out amperometric measurements with or without potential sweeps or steps. The numbers and dimensions of inhomogeneities, including particulates, within the flows may be obtained from measurements of changes in conduction between electrodes with time.

Electrodes or groups of electrodes or conducting connections to the flow paths may be used for affecting the flow rates down the fine flow channels by electro-osmotic and related electro-kinetic effects. Fluxes or pulses of ions to or from the interface regions may be produced or modified by electrophoresis employing such electrodes or connections.

Electrodes contacting fluids in the flow paths may be used to change the redox conditions within flows by electro-reduction or electro-oxidation of species, e. g. converting between $Fe^{2+}$ and $Fe^{3+}$, thus altering the concentration of species in the fluids and partition between immiscible fluids. Electrodes and conducting connections may be used to allow electrical fields to be applied up to and across an interface region, thereby aid or impede transport to and from the interface, and transport across the interface of selected entities, especially ionic species.

The interfacial properties of the fluids and solids, including absorption of some species, interfacial tension, and contact angles to solid surfaces may be modified by applied fields or by redox conditions. Electrodes or conducting connections may thus be used to modify the interfacial. tension and contact angle parameters, and thus alter the pinning, and position of an interface, and hence modify the flow patterns. In the extreme this effect may be used to cause one fluid to pass into the channel normally occupied by another, and provide a means for fluid switching and the production of segmented flows.

Further electrical connections to conducting fluids will allow passage of current providing local heating modifying temperature dependant parameters of the solutions and the surfaces contacted by the solutions. Alternatively resistive electrical connections within or contacting the structure of flow paths, but not electrically contacting the fluids, may be used to heat sections of the device. Similarly inclusion of connections to suitable semiconductor junctions within or contacting the body of the device may be used to heat or cool sections of the device.

Magnetic fields may be applied within a device, and field guides incorporated within the device allowing modification to the transport of magnetic materials or species, including species linked to magnetic micro-particles. Flows may be induced or modified by employing magneto-hydrodynamic phenomena.

Optical interconnects, by guides or optical fibres, may be made to intersect with fluid flows adjacent to the interface region or elsewhere. These may be used for species identification, sensing, and monitoring, and for the production of species by photo-excitation and photochemical reactions. The production of short lived species by photochemical and/or electrochemical means close to the interface region may allow their rapid transfer to a second fluid for subsequent stabilisation or reaction.

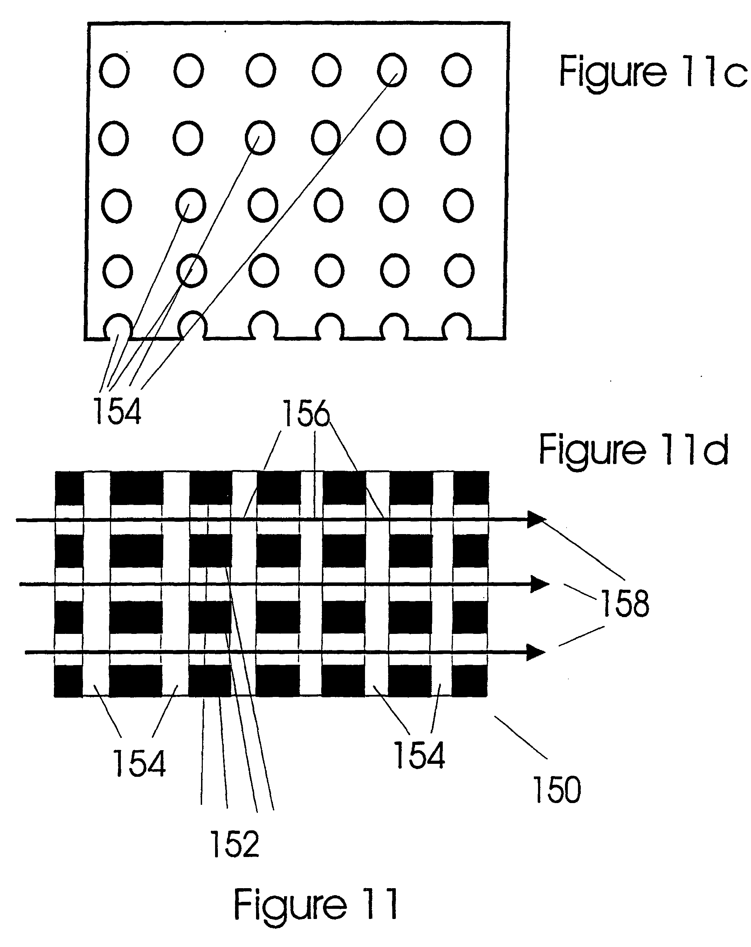

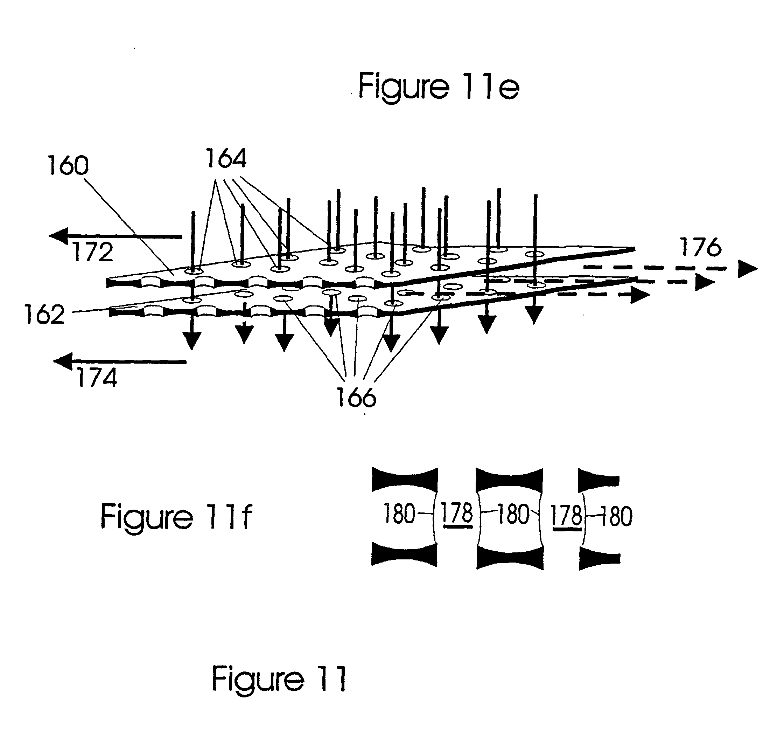

Referring now to Figures 11a and 11b, an embodiment of the invention is shown wherein two outer channels 138 carry a first fluid and a third intermediate channel 140 carries a second immiscible fluid. In a central interface region 142 (shown in section in Figure 11a), third channel 140 communicates on each of two opposite sides of the channel in two interfacial areas144 with first and third channels 138.The width of third channel 140 in the interface region is 1000 micrometres, whereas that of channels 138 is 500 micrometres.None of channel 140 lies further than 500 micrometres from an interfacial area 144.

Figures 11c and 11d are top and side sectional views of an embodiment comprising a three dimensional grid structure formed from a rectangular block 150 comprising a multiplicity of substrate layers 152. First flow paths 154 extend vertically downwardly and each path has a multiplicity of interface regions 156 along its length. Second flow paths 158 extend horizontally, with each second flow path having a multiplicity of interface regions 156 along its length. The result is a very compact system for treating relatively large amounts of fluid.

Figures 11e and 11f show another three dimensional gridlike structure. Figure lie is a schematic perspective view of two spaced parallel plates 160, 162, each having an array 164, 166 of apertures formed therein, the apertures in the opposed plates being aligned with each other. Figure 11f is a fragmentary sectional view through the plates, showing the plates having contoured surfaces. In use, a first immiscible fluid flows in layers 172, 174 above and below plates 160, 162, and a second immiscible liquid flows in a layer 176 between the plates 160, 162. By reason of registering apertures 164, 166, the first liquid, under appropriate conditions, flows continuously from first layer 172 through the registering apertures to layer 174, forming a bubble-like formation 178 which is stable. The outer surface of bubble 178 forms a tubular-like interface 180 with the second liquid, to enable a process of diffusive transport between the two liquids. As regards dimensions, the diameter of apertures 164, 166 is 1000 micrometres or less, and the spacing between plates 160, 162 is a dimension determined by the nature of the liquids, the main objects being to preserve stability of the bubbles 178, while permitting a significant amount of diffusive transfer across interfaces 180. The tubular interface 180 may be regarded as effectively made up of a large number of elemental interfacial areas, and none of the first fluid path in the interface region is further than 500 micrometres from an interfacial area.

While Figure 11 discloses arrangements for providing a compact system with a very large number of interface regions to permit processing of large quantities of liquid, it may be desired to adapt the embodiments such as described with reference to Figure 1 so that they can be employed in an array in which each interface region forms a single process element in the array. There are two basic configurations for such an array:

  1. Parallel Systems. The main application for this geometry is in situations where a significant output of material is required. Since the yield of a single process element is likely to be only of the order of milligrammes or only microgrammes per hour a number of devices in parallel will be needed in almost all situations other than for applications in analysis. As well as increasing the chemical yield of the system parallel systems also open up the possibility of redundancy which is desirable in a number of situations.

  2. Series Systems. There are two main applications here:

    i) As a method of stabilising the system .The contact length between the two fluids in a process element will be determined by the flow properties of the fluids, the transport properties of the various species and the kinetics of the mass transfer reaction. In some situations it may be impossible to achieve the required length in a single process element, so it will be necessary to break the interface into a number of sections. In some situations this may best be achieved by connecting a number of contactors in series. Furthermore in some applications significant quantities of a chemical species will be transferred which will result in changes in large density and viscosity of the immiscible phases which will, in turn change the flow characteristics of the liquids. It may therefore be desirable to split the process into a number of stages during each of which the fluid properties will undergo only moderate changes. The microcontactor used for each stage can therefore be optimised for a limited range of fluid properties.

    ii) Sequential processing. In some situations, a number of sequential processes may be required. For example after a first extraction say from the aqueous to the organic phase it might be desirable to extract some of the transferred species back into a second aqueous phase. This could be accomplished using a series of contactors. For another example after a first extraction from an aqueous to organic phase which may be incomplete, it may be desirable to extract again from the aqueous phase with fresh organic phase, and possibly repeat this process several times to complete the extraction from the aqueous phase This could be accomplished using a series of contactors. Other situations could include dosing of a series of reagents from a series of solutions across immiscible fluid interfaces to for example change acidity and add indicators in a chemical titration process.

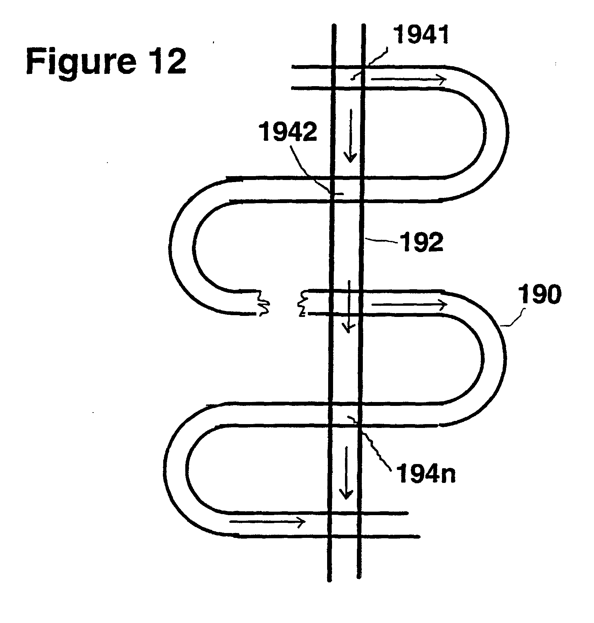

An example of a series system referred to in 2 (i) above is shown in Figure 12 wherein a first channel 190 has a sinuous configuration and intersects a straight second channel 192 at a number of intersection points 1941,1942 .... 194n. Such a structure is formed by having the first channel 30 in an upper surface of one substrate, and the second channel 192 in the lower surface of a substrate, and superimposing the two substrates. The interface between the two channels is thus formed as a series of small interface regions each of a rectangular cross-section equal to the width of the channels, which is 50 micrometres. Each interface region may be regarded as a process element. Such a structure is of use where a less viscous fluid is to be brought into contact with a more viscous fluid. The more viscous fluid is directed through second channel 192 whereas the less viscous fluid, flowing in the sinuous channel can maintain the correct pressure differential at each interface region. Thus there will be a pressure drop along the length of each channel, and the pressure drop will be greater in the more viscous fluid for a given length of channel. Thus by arranging for a greater channel length between each interface point for the less viscous fluid, the pressure differentials can be matched so as to maintain stability throughout the device.

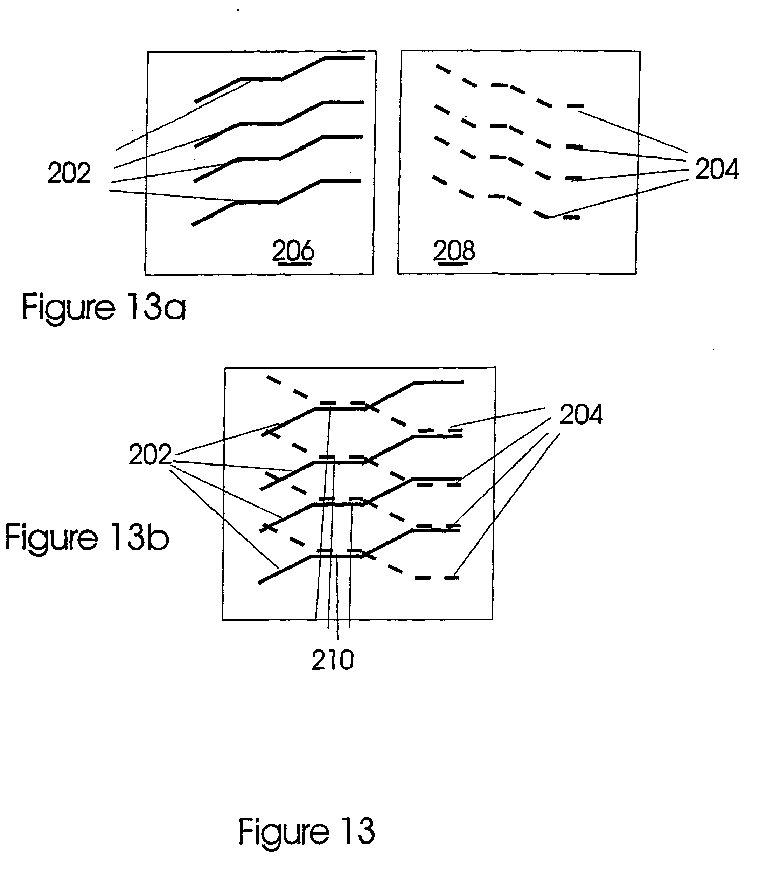

Referring now to the embodiment shown in Figure 13, this is an example described in 2(ii) above of sequential processing in which one liquid phase comes into contact with several flows of the second phase. Channels 202,204 are formed as grooves in the respective surfaces of two silicon substrates 206,208 as shown in Figure 13a. As shown in Figure 13b, the substrates are placed one on top of the other so that the channels 202,204 are superimposed to form interface regions as at 210, each interface region forming a process element. It may thus be seen that each channel 202, 204 contains a row of series connected process elements in which the desired diffusive transfer process can be carried out, with separate streams of fluid in the other channel 204 or 202.

The main benefit of this geometry is to ensure a large area of contact between the two phases. In this case it is assumed that the composition of each of the two phases is the same throughout all channels containing that phase. However in some situations it would be advantageous to change the properties of one phase to allow, for example, back extraction. For example in separation of ferric iron from ferrous iron, ferric iron could be transferred from aqueous to organic leaving ferrous iron in the aqueous solution, and then the ferric iron may be recovered by back extraction into a second aqueous phase with a change in acidity or oxidation state. This would be done by appropriate selection of the fluids in the separate channels.

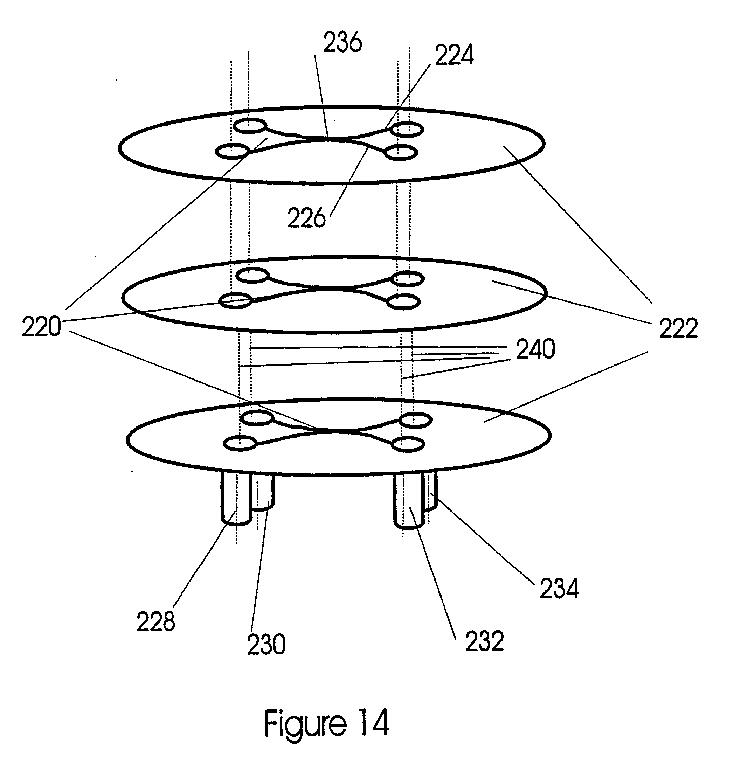

Referring to the embodiment shown in Figure 14, this is an example of a parallel system described in 1. above, and provides an effective means of connecting a large number of contactors or process elements 220 together in parallel. It is desirable to connect the process elements together in such a manner that they all experience the same pressure drop and therefore have the same flow conditions. Furthermore when using fluids containing particulate matter there is some risk of narrow channels becoming blocked, so it is important to design a system where any blockage will affect a minimum number of process elements. Process elements 220 are fabricated on a multiplicity of flat plates 222 which are made of metal, glass, ceramic, polymer or some other material compatible with the chemical process taking place. Each process element 220 comprises first and second fluid flow paths 224, 226 having inlets 228, 230 and outlets 232, 234. In a central interface region 236, flow paths 224,226 contact one another in an interface region in which a stable open interface is formed between the two liquids. The configuration is similar to that shown in Figure 1. The inlets 228, 230 and outlets 232, 234 of the contactor are formed as openings which pass right through the plate. In use, the plates are stacked together ( they are shown spaced apart for clarity) with the openings aligned so that they form broad conduits 240 oriented approximately perpendicular to the planes containing the contactors. The planes are then held together by clamping, adhesive bonding, fusion or any other suitable method which ensures a fluid-tight seal. Although the diagram shows only one process element per plate, it is envisaged that a number of such process elements could be fabricated on each plate either by increasing the number of openings in the plate or by connecting more than one process element to each opening.

## Claims

1. Apparatus for carrying out a process of diffusive transfer between first and second immiscible fluids, said apparatus comprising first and second flow paths (11, 12, 31, 33, 50, 52, 103, 104, 111, 115, 138, 140, 154, 158, 172, 174, 176, 190, 192, 202, 204, 224, 226) for permitting laminar fluid flow of respective first and second immiscible fluids therethrough, portions of the flow paths being disposed adjacent one another and communicating with one another in a region (16, 105, 119, 120, 121, 142, 156, 1941, 1942, 194n, 210, 236) which is such as to permit the fluids to form a stable open interface (40, 57, 144, 180) therein, wherein at least the first flow path in the interface region has a width normal to the interface within the range 10 to 500 micrometres, and wherein regions of said first and second flow paths outside of said interface region are separated (15, 17, 117, 118) to permit flow of the respective first and second fluids into and out of the interface region without mixing.

2. Apparatus according to claim 1 wherein said second fluid flow path has a width normal to the interface within the range 10 to 500 micrometres.

3. Apparatus for carrying out a process of diffusive transfer of an entity from a first to a second fluid immiscible with the first, said apparatus comprising first and second flow paths (11, 12, 31, 33, 50, 52, 103, 104, 111, 115, 138, 140, 154, 158, 172, 174, 176, 190, 192, 202, 204, 224, 226) for permitting laminar fluid flow of respective first and second immiscible fluids therethrough, portions of the channels being disposed adjacent one another and communicating with one another in a region (16, 105, 119, 120, 121, 142, 156, 1941, 1942, 194n, 210, 236) which is such as to permit the fluids to form a stable open interface (40, 57, 144, 180) therein, wherein the width (l) of at least the first flow path adjacent said interface region and normal to the interface is determined by the inequality:

$$l^2 < Dtx^{-1}$$

where D is the diffusion coefficient of the transferring entity within the first fluid, t is a time period between 0.1 and 100 seconds for fluid portions occupying a position in the interface region, and x is a numerical constant having a value of 0.005 or more, and wherein regions of said first and second flow paths outside of said interface region are separated (15, 17, 117, 118) to permit flow of the respective first and second fluids into and out of the interface region without mixing.

4. Apparatus according to claim 3 wherein the width (1) of said second flow path adjacent said interface region and normal to the interface is determined by the inequality:

$$l^2 < Dtx^{-1}$$

where D is the diffusion coefficient of the transferring entity within the second fluid, t is a time period between 0.1 and 100 seconds for fluid portions occupying a position in the interface region, and x is a numerical constant having a value of 0.005 or more.

5. Apparatus according to claim 3 or 4 wherein x has the value of 0.01 or more.

6. Apparatus according to claim 3 or 4 wherein x has the value of 0.1 or more.

7. Apparatus according to any of claims 3 to 6 wherein said diffusion coefficient D has a value between $10^{-13}$ and $10^{-9}$ m²s⁻¹.

8. Apparatus according to claim 7 wherein said diffusion coefficient D has a value between $10^{-11}$ and $10^{-10}$ m²s⁻¹.

9. Apparatus according to any preceding claim wherein the height of said interface region in a direction normal to fluid flow is between 5 and 200 micrometres.

10. Apparatus according to claim 9 wherein the height of said interface region is between 5 and 30 micrometres.

11. Apparatus according to any preceding claim wherein said interface has a height in a direction normal to fluid flow equal to or not less than one twentieth of the height dimension of the adjacent flow paths.

12. Apparatus according to any preceding claim wherein the surfaces of said first and second flow paths are of different materials (32, 47, 49, 113, 123) with different wetting properties for stabilising the interface for a range of pressure differentials between said first and second fluids across said interface.

13. Apparatus according to any preceding claim wherein the flow paths surfaces in said interface region are contoured (18, 19) adjacent a desired position of the interface for stabilising the interface for a range of pressure differentials across the interface between said two fluids.

14. Apparatus according to any preceding claim wherein said first and second flow paths are etched or otherwise formed as grooves in the surface of a common substrate (13, 70) and a plate member (14, 80) is secured to the surface of the substrate to define with the grooves said first and second flow paths.

15. Apparatus according to any of claims 1 to 13 including first and second substrate members (13, 34, 100, 102, 112, 114, 162, 164) having opposed surfaces where said first and second flow paths are formed.

16. Apparatus according to claim 15 wherein said first flow path (103) is formed as a groove or recess in the surface of said first substrate member (100), and said second flow path (104) is formed as a groove or recess in the surface of said second substrate member (102), said surfaces being placed against one another and said flow paths being at least partially superimposed to define the interface region.

17. Apparatus according to claim 16 wherein said grooves or recesses forming said first and second flow paths are partially offset from one another to define an interface region of smaller dimensions than those of said grooves or recesses.

18. Apparatus according to claim 15 wherein said first and second substrate members (160, 162) are disposed parallel to one another and spaced by a predetermined distance and include respective first and second arrays of apertures (164, 166), the apertures of the arrays registering with one another whereby to define first fluid flow paths (172, 174) extending between registering apertures and a second fluid flow path (176) extending between and parallel to said substrate members.

19. Apparatus according to any preceding claim wherein said second fluid flow path is formed such that there exists in the interface region more than one interfacial area between said first and second fluids (142, 180), and wherein the width of said first fluid flow path in the interface region is such that none of said first fluid flow path lies further than (i) between 10 and 500 micrometres from the closest interfacial area in a direction normal thereto, or (ii) a distance (l) determined by the inequality $l^2 < D\,t\,x^{-1}$, from the closest interfacial area in a direction normal thereto, where the symbols have the meanings ascribed as aforesaid.

20. Apparatus according to any preceding claim wherein a third flow path (140) is provided for carrying a third fluid, and one or more further interface regions (142) are provided for providing selected interfaces between the first and/or second and/or third fluids.

21. Apparatus according to claim 20 wherein the third fluid flow path is subject to the same limitations as to dimensions as the first and/or second fluid flow paths.

22. Apparatus according to any preceding claim including electrode means (a, b, c), mounted in or adjacent the flow paths, for sensing, monitoring, and/or applying electric, magnetic or electromagnetic fields to one or more fluids.

23. A system for processing quantities of first and second immiscible fluids including a multiplicity of process elements (194n, 210, 220), each process element comprising apparatus as set forth in any preceding claim.

24. A system according to claim 23 including manifold means (240) to deliver fluid to and from the inlets and outlets of each process element.

25. A system as claimed in claim 24 in which said process elements are fabricated on a series of stacked substrates (222), the first and second flow paths (224, 226) of each process element communicating with fluid ports (240) which extend through the stack.

26. A system according to claim 23 including a first set of first fluid flow paths (202) and a second set of second fluid flow paths (204), wherein the flow paths of the sets intercommunicate so that, for a first fluid flow path, there is disposed along its length a series of spaced interface regions (210) with second fluid flow paths, and vice versa.

27. A system according to claim 26 including first and second superimposed substrates (206, 208), with the first set of fluid flow paths being formed in the surface of one substrate and the second set of fluid flow paths being formed in a contacting face of the second substrate.

28. A system according to claim 23 wherein a second fluid flow path has a zigzag, sinuous or convoluted configuration (190) so as to define with a first fluid flow path (192) a series of interface regions (1941, 1942, 194n) along the length of said first fluid flow path.

29. A method of carrying out a process of diffusive transfer between first and second immiscible fluids, said method comprising:

1) providing first and second flow paths (11, 12, 31, 33, 50, 52, 103, 104, 111, 115, 138, 140, 154, 158, 172, 174, 176, 190, 192, 202, 204, 224, 226) having portions disposed adjacent one another and communicating with one another in a region (16, 105, 119, 120, 121, 142, 156, 1941, 1942, 194n, 210, 236) in which the fluids can contact one another and wherein at least the first flow path in the interface region has a width normal to the interface within the range 10 to 500 micrometres;
2) flowing the first and second immiscible fluids through said respective first and second flow paths such that, at least in said region, the flow of both fluids is essentially laminar, and a stable open interface (40, 57, 144, 180) is formed between the fluids;
3) permitting transfer of at least 1% of the total amount of at least one diffusive entity at said interface between the two fluids; and
4) flowing the fluids into and out of (15, 17, 117, 118) the interface region in their respective flow paths without mixing of the fluids.

30. A method of carrying out a process of transferring at least one diffusive entity from a first fluid to a second fluid immiscible with the first, the method comprising:

1) providing first and second flow paths (11, 12, 31, 33, 50, 52, 103, 104, 111, 115, 138, 140, 154, 158, 172, 174, 176, 190, 192, 202, 204, 224, 226) having portions disposed adjacent one another and communicating with one another in a region (16, 105, 119, 120, 121, 142, 156, 1941, 1942, 194n, 210, 236) in which the fluids can contact one another;

2) flowing the first and second fluids through said respective first and second flow paths such that, at least in said region, the flow of both fluids is essentially laminar and a stable open interface (40, 57, 144, 180) is formed between the fluids;

3) wherein at least 1% of the total amount of a diffusive entity that may be transferred from the first fluid across the interface is transferred to the second fluid and the following inequality holds:

$$1^2 < Dtx^{-1}$$

where D is the diffusion coefficient of the diffusive entity within the first fluid, t is a time period between 0.1 and 100 seconds in which a portion of the first fluid occupies a position in the interface region, 1 is the width of the first flow path adjacent said interface region and normal to the interface, and x is a numerical constant having a value of 0.005 or more; and

4) flowing the fluids into and out of (15, 17, 117, 118) the interface region in their respective flow paths without mixing of the fluids.

31. A method as claimed in claim 30 wherein for said second fluid and second fluid flow path the following inequality holds:

$$1^2 < Dtx^{-1}$$

where D is the diffusion coefficient of the diffusive entity in the second fluid and 1 is the width of the second flow path adjacent said interface region and normal to the interface.

32. A method as claimed in claim 30 or 31 wherein the value of x is 0.01 or more.

33. A method as claimed in claim 30 or 31 wherein the value of x is 0.1 or more.

34. A method according to any of claims 30 to 33 wherein said diffusion coefficient D has a value between $10^{-13}$ and $10^{-9}$ $m^2s^{-1}$.

35. A method according to claim 34 wherein said diffusion coefficient D has a value between $10^{-11}$ and $10^{-10}$ $m^2s^{-1}$.

36. A method according to claim 29 wherein said second flow path is formed having a width in the region of the interface and normal to the interface of between 10 and 500 micrometres.

37. A method according to any of claims 30 to 36 wherein said second flow path is formed such that, in the interface region, more than one interfacial area (142, 180) is formed with the first fluid flow path, and wherein the width of the first fluid flow path in the interfacial region is such that no part of the first fluid flow path is is further from an interfacial area than either (i) a distance between 10 and 500 micrometres, or (ii) a distance (1) determined by the aforesaid inequality.

38. A method according to any of claims 29 to 37 including a third fluid flow path (140) and providing selected interface regions (142) between the first, second and/or third fluid flow paths and flowing a third fluid through said third fluid flow path to form selected interfaces between the first, second and third fluids for permitting diffusion of at least one selected entity thereacross.

39. A method as claimed in any of claims 29 to 38 wherein the fluids are selected from gases, supercritical fluids and liquids, the selected fluids being mutually immiscible.

40. A method as claimed in claim 39 wherein the first, second and third fluids are each liquid.

41. A method as claimed in any of claims 29 to 40 wherein the first fluid is an aqueous liquid solution and the second fluid is an organic liquid or vice versa.

42. A method as claimed in claim 41 wherein the process is solvent extraction of at least one solute from the aqueous solution to the organic liquid, or vice versa.

43. A method as claimed in any of claims 29 to 42 wherein one or more fluids are sensed or monitored by electrode means in or adjacent the flow paths.

44. A method as claimed in any of claims 30 to 45 including applying electric, magnetic or electromagnetic fields to one or more fluids.

45. A method according to any of claims 29 to 44 wherein said interface region is formed having a height in a direction normal to fluid flow of between 5 and 200 micrometres.

46. A method according to claim 45 wherein the height of said interface region is between 5 and 30 micrometres.

**47.** A method according to any of claims 29 to 46 wherein said interface is formed having a height in a direction normal to fluid flow equal to or not less than one twentieth of the height dimension of the adjacent flow paths.

**48.** A method according to any of claims 29 to 47 wherein surfaces of said first and second flow paths are provided, said surfaces comprising different materials (32, 47, 49, 113, 123) with different wetting properties for stabilising the interface for a range of pressure differentials between said first and second fluids across said interface.

**49.** A method according to any of claims 29 to 48 wherein flow paths surfaces are provided in said interface region, said surfaces being contoured (18, 19) adjacent a desired position of the interface for stabilising the interface for a range of pressure differentials across the interface between said two fluids.

**50.** A method according to any of claims 29 to 49 wherein a multiplicity of process elements (194n, 210, 220) is provided, each process element comprising an interface region, said method facilitating simultaneous processing of the fluids within each process element.

**51.** A method according to claim 50 comprising providing a first set of first fluid flow paths (202) and a second set of second fluid flow paths (204), wherein the flow paths of the sets intercommunicate so that, for a first fluid flow path, there is disposed along its length a series of spaced interface regions (210) with second fluid flow paths, and vice versa.

**52.** A method according to claim 50 comprising providing first and second fluid flow paths such that said second fluid flow path has a zigzag, sinuous or convoluted configuration (190) so as to define with said first fluid flow path (192) a series of interface regions (1941, 1942, 194n) along the length of said first fluid flow path.

**Patentansprüche**

**1.** Vorrichtung zur Durchführung eines Diffusionstransfer-Verfahrens zwischen einem ersten und einem zweiten Fluid, welche nicht miteinander vermischbar sind, mit einem ersten und einem zweiten Strömungsweg (11, 12, 31, 33, 50, 52, 103, 104, 111, 115, 138, 140, 154, 158, 172, 174, 176, 190, 192, 202, 204, 224, 226) zum Ermöglichen einer laminaren Durchströmung des ersten bzw. zweiten der nicht miteinander vermischbaren Fluide, wobei Abschnitte der Strömungswege aneinander angrenzend angeordnet sind und in einem Bereich (16, 105, 119, 120, 121, 142, 156, 1941, 1942, 194n, 210, 236) miteinander kommunizieren, der derart ausgebildet ist, daß die Fluide eine stabile offene Grenzfläche (40, 57, 144, 180) darin bilden, und wobei mindestens der erste Strömungsweg im Grenzflächenbereich eine Breite (rechtwinklig zur Grenzfläche) zwischen 10 und 500 Mikrometern aufweist und wobei Abschnitte des ersten und zweiten Strömungswegs außerhalb dieses Grenzflächenbereiches voneinander getrennt sind (15, 17, 117, 118), um die Strömung der beiden Fluide in den bzw. aus dem Grenzflächenbereich ohne Vermischen zu ermöglichen.

**2.** Vorrichtung nach Anspruch 1, wobei der zweite Fluidströmungsweg eine zur Grenzfläche rechtwinklige Breite zwischen 10 und 500 Mikrometern aufweist.

**3.** Vorrichtung zur Durchführung eines Diffusionstransfer-Verfahrens einer Einheit von einem ersten Fluid zu einem zweiten Fluid, das mit dem ersten Fluid unvermischbar ist, mit einem ersten und einem zweiten Strömungsweg (11, 12, 31, 33, 50, 52, 103, 104, 111, 115, 138, 140, 154, 158, 172, 174, 176, 190, 192, 202, 204, 224, 226) zur Ermöglichung einer laminaren Durchströmung des ersten bzw. zweiten der nicht miteinander vermischbaren Fluide, wobei die Strömungswege aneinander angrenzend angeordnet sind und in einem Bereich (16, 105, 119, 120, 121, 142, 156, 1941, 1942, 194n, 210, 236) miteinander kommunizieren, der derart ausgebildet ist, daß die Fluide eine stabile offene Grenzfläche (40, 57, 144, 180) darin bilden, und wobei die zur Grenzfläche rechtwinklige Breite (1) mindestens des ersten Strömungswegs, wo dieser an den Grenzflächenbereich angrenzt, von folgender Ungleichung bestimmt wird:

$$l^2 < D\,t\,x^{-1}$$

in der D der Diffusionskoeffizient der übertragenen Einheit innerhalb des ersten Fluids ist, t ein Zeitintervall zwischen 0,1 und 100 Sekunden ist, innerhalb dessen Fluidanteile eine Position im Grenzflächenbereich einnehmen, und x eine numerische Konstante größer oder gleich 0.005 ist, und wobei Abschnitte des ersten und zweiten Strömungswegs außerhalb dieses Grenzflächenbereiches voneinander getrennt sind (15, 17, 117, 118), um die Strömung der beiden Fluide in den bzw. aus dem Grenzflächenbereich ohne Vermischung zu ermöglichen.

**4.** Vorrichtung nach Anspruch 3, wobei die zur Grenzfläche rechtwinklige Breite (l) des zweiten Strömungswegs, wo dieser an den Grenzflächenbereich angrenzt, von folgender Ungleichung bestimmt wird:

$$I^2 < Dtx^{-1}$$

in der D der Diffusionskoeffizient der übertragenen Einheit innerhalb des zweiten Fluids ist, t ein Zeitintervall zwischen 0,1 und 100 Sekunden ist, innerhalb dessen Fluidanteile eine Position im Grenzflächenbereich einnehmen, und x eine numerische Konstante größer oder gleich 0.005 ist.

5. Vorrichtung nach Anspruch 3 oder 4, wobei x größer oder gleich 0,01 ist.

6. Vorrichtung nach Anspruch 3 oder 4, wobei x größer oder gleich 0,1 ist.

7. Vorrichtung nach einem der Ansprüche 3 bis 6, wobei der Diffusionskoeffizient D einen Wert zwischen $10^{-13}$ und $10^{-9}$ m$^2$s$^{-1}$ aufweist.

8. Vorrichtung nach Anspruch 7, wobei der Diffusionskoeffizient D einen Wert zwischen $10^{-11}$ und $10^{-10}$ m$^2$s$^{-1}$ aufweist.

9. Vorrichtung nach einem der vorangehenden Ansprüche, wobei die Höhe des Grenzflächenbereichs in einer zur Fluidströmung rechtwinkligen Richtung zwischen 5 und 200 Mikrometer beträgt.

10. Vorrichtung nach Anspruch 9, wobei die Höhe des Grenzflächenbereichs zwischen 5 und 30 Mikrometern beträgt.

11. Vorrichtung nach einem der vorangehenden Ansprüche, wobei die Höhe der Grenzfläche in einer zur Fluidströmung rechtwinkligen Richtung ein zwanzigstel oder nicht weniger als ein zwanzigstel der Höhenausdehnung der angrenzenden Strömungswege beträgt.

12. Vorrichtung nach einem der vorangehenden Ansprüche, wobei die Oberflächen der genannten ersten und zweiten Strömungswege aus unterschiedlichen Materialien (32, 47, 49, 113, 123) mit unterschiedlichen Benetzungseigenschaften bestehen, um die Grenzfläche für einen Bereich von Druckdifferenzen über die Grenzfläche zwischen dem genannten ersten und zweiten Fluid zu stabilisieren.

13. Vorrichtung nach einem der vorangehenden Ansprüche, wobei die Oberflächen der Strömungswege im Grenzflächenbereich, angrenzend an eine erwünschte Position der Grenzfläche, strukturiert (18,19) sind, um die Grenzfläche für einen Bereich von Druckdifferenzen über die Grenzfläche zwischen den genannten beiden Fluiden zu stabilisieren.

14. Vorrichtung nach einem der vorangehenden Ansprüche, wobei der genannte erste und zweite Strömungsweg geätzt oder auf anderem Wege als Ausnehmungen auf der Oberfläche eines gemeinsamen Substrats (13,70) ausgebildet sind und wobei ein Plattenelement (14, 80) sicher mit dem Substrat verbunden ist, um zusammen mit den Ausnehmungen den ersten und zweiten Strömungsweg zu bilden.

15. Vorrichtung nach einem der Ansprüche 1 bis 13 mit einem ersten und zweiten Substratelement (13, 34, 100, 102, 112, 114, 162, 164), welche einander gegenüberliegende Oberflächen aufweisen, in denen der erste und zweite Strömungsweg ausgebildet ist.

16. Vorrichtung nach Anspruch 15, wobei der erste Strömungsweg (103) als Ausnehmung oder Vertiefung auf der Oberfläche des ersten Substratelements (100) ausgebildet ist und wobei der zweie Strömungsweg (104) als Ausnehmung oder Vertiefung auf der Oberfläche des zweiten Substratelementes (102) ausgebildet ist, wobei diese Oberflächen gegeneinander anliegend angeordnet sind und die Strömungswege zur Ausbildung des Grenzflächenbereichs zumindest teilweise übereinander liegen.

17. Vorrichtung nach Anspruch 16, wobei die Ausnehmungen oder Vertiefungen, die die ersten und zweiten Strömungswege bilden, teilweise zueinander versetzt sind, um einen Grenzflächenbereich mit kleineren Ausdehnungen, als denen der genannten Nuten oder Vertiefungen zu bilden.

18. Vorrichtung nach Anspruch 15, wobei das genannte erste und zweite Substratelement (160, 162) mit einem vorbestimmten Abstand und parallel zueinander angeordnet sind und erste bzw. zweite Gruppierungen von Öffnungen (164, 166) aufweisen, wobei die Öffnungen der Gruppierungen deckungsgleich zueinander sind, wodurch erste Fluidströmungswege (172, 174) gebildet werden, die zwischen den deckungsgleichen Öffnungen verlaufen, und ein zweiter Fluidströmungsweg (176) gebildet wird, der zwischen den genannten Substratelementen und parallel hierzu verläuft.

19. Vorrichtung nach einem der vorangehenden Ansprüche, wobei der zweite Fluidströmungsweg so gebildet ist, daß im Grenzflächenbereich mehr als ein Grenzflächengebiet zwischen dem genannten ersten und zweiten Fluid (142, 180) vorhanden ist, und wobei die Breite des ersten Fluidströmungswegs im Grenzflächenbereich derart ist, daß kein erster Fluidströmungsweg weiter als (i) zwischen 10 und 500 Mikrometern, oder (ii) eine Distanz (1) gemäß der Ungleichung $l^2 < D\,t\,x^{-1}$ von dem nächsten Grenzflächengebiet in einer zu diesem rechtwinkligen Richtung entfernt ist, wobei die Symbole die oben beschriebene Bedeutung haben.

20. Vorrichtung nach einem der vorangehenden Ansprüche, wobei ein dritter Strömungsweg (140) zur Aufnahme eines dritten Fluids bereitgestellt wird, und wobei ein oder mehr weitere Grenzflächenbereiche (142) zur Schaffung ausgewählter Grenzflächen zwischen dem ersten und/oder zweiten und/oder dritten Fluid vorgesehen sind.

21. Vorrichtung nach Anspruch 20, wobei der dritte Fluidströmungsweg hinsichtlich seiner Ausdehnung denselben Einschränkungen unterliegt, wie der erste und/oder der zweite Fluidströmungsweg.

22. Vorrichtung nach einem der vorangehenden Ansprüche, mit Elektrodenmitteln (a, b, c), die in oder nahe der Strömungswege angeordnet sind, um ein auf ein oder mehrere Fluide wirkendes elektrisches, magnetisches, oder elektromagnetisches Feld zu messen und zu überwachen und/oder aufzuprägen.

23. System zur Verarbeitung von Mengen erster und zweiter nicht miteinander vermischbarer Fluide, das eine Vielzahl von Prozesselementen (194n, 210, 220) aufweist, wobei jedes Prozesselement eine Vorrichtung nach einem der vorangehenden Ansprüche aufweist.

24. System nach Anspruch 23, mit Verteilermitteln (240) zur Förderung von Fluid zu den bzw. aus den Eingängen und Ausgängen jedes Prozesselements.

25. System nach Anspruch 24, bei dem die genannten Prozesselemente aus einer Anzahl übereinander geschichteter Substraten (222) hergestellt sind, wobei der erste und zweite Strömungsweg (224, 226) eines jeden Prozesselementes mit Fluidöffnungen (240) kommunizieren, die sich durch den Substratstapel erstrecken.

26. System nach Anspruch 23, mit einem ersten Satz erster Fluidströmungswege (202) und einem zweiten Satz zweiter Fluidströmungswege (204), wobei die Strömungswege der Sätze derart miteinander kommunizieren, daß bei einem ersten Fluidströmungsweg entlang seiner Länge eine Reihe von beabstandeten Grenzflächenbereichen (210) mit den zweiten Fluidströmungswegen angeordnet ist und umgekehrt.

27. System nach Anspruch 26, mit ersten und zweiten übereinander angeordneten Substraten (206, 208), wobei die erste Reihe von Fluidströmungswegen auf der Oberfläche des einen Substrats und die zweite Reihe von Fluidströmungswegen auf einer Kontaktfläche des zweiten Substrats ausgebildet ist.

28. System nach Anspruch 23, bei dem der zweite Fluidströmungsweg eine zickzackförmige, eine sinusförmige oder eine gebogene Struktur (190) aufweist, um somit mit dem ersten Fluidströmungsweg (192) eine Serie von Grenzflächenbereichen (1941, 1942, 194n) entlang des ersten Fluidströmungswegs auszubilden

29. Verfahren zur Durchführung eines Diffusionstransfer-Prozesses zwischen einem ersten und einem zweiten Fluid, welche nicht miteinander vermischbar sind, welches Verfahren folgendes umfaßt:

1) Bereitstellung erster und zweiter Strömungswege (11, 12, 31, 33, 50, 52, 103, 104, 111, 115, 138, 140, 154, 158, 172, 174, 176, 190, 192, 202, 204, 224, 226), die aneinander angrenzende Abschnitte aufweisen und die in einem Bereich (16, 105, 119, 120, 121, 142, 156, 1941, 1942, 194n, 210, 236) miteinander kommunizieren, in dem die Fluide einander kontaktieren können, wobei mindestens der erste Strömungsweg im Bereich der Grenzfläche eine zur Grenzfläche rechtwinklige Breite zwischen 10 und 500 Mikrometern aufweist;
2) Durchströmung des ersten Strömungswegs mit dem ersten Fluid und des zweiten Strömungswegs mit dem zweiten der nicht miteinander vermischbaren Fluide, so daß mindestens im genannten Bereich die Strömung beider Fluide im wesentlichen laminar ist und eine stabile, offene Grenzfläche (40, 57, 144, 180) zwischen den beiden Fluiden gebildet wird;
3) Ermöglichung des Transfers von mindestens 1% der gesamten Menge mindestens einer diffundierenden Einheit an der genannten Grenzfläche zwischen den beiden Fluiden, und
4) Ein- und Ausströmung der Fluide durch ihre jeweiligen Strömungswege in den bzw. aus dem (15, 17, 117, 118) Grenzflächenbereich ohne Vermischen der Fluide.

30. Verfahren zur Durchführung eines Prozesses für den Transfer mindestens einer diffundierenden Einheit von einem ersten Fluid in ein zweites, mit dem ersten unvermischbares Fluid, welches Verfahren folgendes umfasst:

1) Bereitstellung erster und zweiter Strömungswege (11, 12, 31, 33, 50, 52, 103, 104, 111, 115, 138, 140, 154, 158, 172, 174, 176, 190, 192, 202, 204, 224, 226), die aneinander angrenzende Abschnitte aufweisen und die in einem Bereich (16, 105, 119, 120, 121, 142, 156, 1941, 1942, 194n, 210, 236) miteinander kommunizieren, in dem die Fluide einander kontaktieren können;

2) Durchströmung des ersten Strömungswegs mit dem ersten Fluid und des zweiten Strömungswegs mit dem zweiten der nicht miteinander vermischbaren Fluide, so daß mindestens im genannten Bereich die Strömung beider Fluide im wesentlichen laminar ist und eine stabile, offene Grenzfläche (40, 57, 144, 180) zwischen den beiden Fluiden gebildet wird;

3) wobei mindestens 1% der gesamten Menge einer diffundierenden Einheit, die von dem ersten Fluid über die Grenzfläche übertragbar ist, in das zweite Fluid übertragen wird und wobei folgende Ungleichung gilt:

$$l^2 < D\,t\,x^{-1}$$

in der D der Diffusionskoeffizient der diffundierenden Einheit innerhalb des ersten Fluids ist, t ein Zeitintervall zwischen 0,1 und 100 Sekunden ist, innerhalb dessen ein Anteil des ersten Fluids eine Position im Grenzflächenbereich einnimmt, 1 die zur Grenzfläche rechtwinklige Breite des ersten Strömungswegs ist, wo dieser an den Grenzflächenbereich angrenzt, und x eine numerische Konstante größer oder gleich 0.005 ist, und

4) Ein- und Ausströmung der Fluide durch ihre jeweiligen Strömungswege in den bzw. aus dem (15, 17, 117, 118) Grenzflächenbereich ohne Vermischen der Fluide.

31. Verfahren nach Anspruch 30, wobei für das zweite Fluid und den zweiten Fluidströmungsweg die folgende Ungleichung gilt:

$$l^2 < D\,t\,x^{-1}$$

in der D der Diffusionskoeffizient der diffundierenden Einheit im zweiten Fluid ist und 1 die zur Grenzfläche rechtwinklige Breite des zweiten Strömungswegs ist, wo dieser an den Grenzflächenbereich angrenzt.

32. Verfahren nach Anspruch 30 oder 31, wobei x gleich 0,01 oder größer ist.

33. Verfahren nach Anspruch 30 oder 31, wobei x gleich 0,1 oder größer ist.

34. Verfahren nach einem der Ansprüche 30 bis 33, wobei der Diffusionskoeffizient D einen Wert zwischen $10^{-13}$ und $10^{-9}$ $m^2s^{-1}$ aufweist.

35. Verfahren nach Anspruch 34, wobei der Diffusionskoeffizient einen Wert zwischen $10^{-11}$ und $10^{-10}$ $m^2s^{-1}$ aufweist.

36. Verfahren nach Anspruch 29, wobei der zweite Strömungsweg so ausgebildet ist, daß er im Grenzflächenbereich eine zur Grenzfläche rechtwinklige Breite zwischen 10 und 500 Mikrometern aufweist.

37. Verfahren nach einem der Ansprüche 30 bis 36, wobei der zweite Strömungsweg derart ausgebildet ist, daß im Grenzflächenbereich mit dem ersten Fluidströmungsweg mehr als ein Grenzflächengebiet (142, 180) ausgebildet wird, und wobei die Breite des ersten Fluidströmungswegs im Grenzflächenbereich so gestaltet ist, daß kein Abschnitt des ersten Fluidströmungswegs weiter als (i) eine Distanz zwischen 10 und 500 Mikrometern, oder (ii) eine Distanz (1) gemäß der obigen Ungleichung von einem Grenzflächengebiet entfernt ist.

38. Verfahren nach einem der Ansprüche 29 bis 37, umfassend einen dritten Fluidströmungsweg (140) und die Bereitstellung ausgewählter Grenzflächenbereiche (142) zwischen dem ersten, zweiten und/oder dritten Fluidströmungsweg und Durchströmung des dritten Fluidströmungswegs mit einem dritten Fluid, um ausgewählte Grenzflächen zwischen dem ersten, zweiten und dritten Fluid auszubilden, um die Diffusion von mindestens einer ausgewählten Einheit über diese Grenzflächen zu ermöglichen.

39. Verfahren nach einem der Ansprüche 29 bis 38, wobei die Fluide Gase, superkritische Fluide und Flüssigkeiten sein können, wobei die ausgewählten Fluide miteinander unvermischbar sind.

40. Verfahren nach Anspruch 39, wobei das erste, zweite und dritte Fluid jeweils eine Flüssigkeit ist.

41. Verfahren nach einem der Ansprüche 29 bis 40, wobei das erste Fluid eine wässrige Flüssigkeitslösung ist und das zweite Fluid eine organische Flüssigkeit ist, oder umgekehrt.

42. Verfahren nach Anspruch 41, wobei der Prozess eine Solvent-Extraktion mindestens eines gelösten Stoffes aus der wässrigen Lösung in die organische Lösung oder umgekehrt ist.

43. Verfahren nach einem der Ansprüche 29 bis 42, wobei eins oder mehrere Fluide mittels Elektrodenmitteln in oder nahe der Strömungswege gemessen oder überwacht werden.

**44.** Verfahren nach einem der Ansprüche 30 bis 45, welches das Aufprägen elektrischer, magnetischer oder elektromagnetischer Felder auf eines oder mehrere Fluide umfasst..

**45.** Verfahren nach einem der Ansprüche 29 bis 44, wobei der genannte Grenzflächenbereich mit einer Höhe zwischen 5 und 200 Mikrometern in einer Richtung senkrecht zur Fluidströmung gebildet wird.

**46.** Verfahren nach Anspruch 45, wobei der Grenzflächenbereich eine Höhe zwischen 5 und 30 Mikrometern aufweist.

**47.** Verfahren nach einem der Ansprüche 29 bis 46, wobei die genannte Grenzfläche mit einer Höhe in einer zur Fluidströmung rechtwinkligen Richtung gebildet wird, die gleich oder nicht weniger als ein zwanzigstel der Höhenausdehnung der angrenzenden Strömungswege ist.

**48.** Verfahren nach einem der Ansprüche 29 bis 47, wobei Oberflächen der genannten ersten und zweiten Strömungswege bereitgestellt werden, welche unterschiedliche Materialien (32, 47, 49, 113, 123) mit unterschiedlichen Benetzungseigenschaften aufweisen, um die Grenzfläche für einen Bereich von Druckdifferenzen über die Grenzfläche zwischen den genannten ersten und zweiten Fluiden zu stabilisieren.

**49.** Verfahren nach einem der Ansprüche 29 bis 48, wobei Strömungswegoberflächen in dem genannten Grenzflächenbereich geschaffen werden, welche Oberflächen nahe einer gewünschten Position der Grenzfläche strukturiert (18, 19) sind, um die Grenzfläche für einen Bereich von Druckdifferenzen über die Grenzfläche zwischen den beiden genannten Fluiden zu stabilisieren.

**50.** Verfahren nach einem der Ansprüche 29 bis 49, wobei eine Vielzahl von Prozesselementen (194n, 210, 220) bereit gestellt wird, wobei jedes Prozesselement einen Grenzflächenbereich aufweist und wobei das genannte Verfahren die simultane Verarbeitung der Fluide innerhalb jedes Prozesselementes erleichtert.

**51.** Verfahren nach Anspruch 50, umfassend das Bereitstellen eines ersten Satzes erster Fluidströmungswege (202) und eines zweiten Satzes zweiter Fluidströmungswege (204), wobei die Strömungswege der Sätze derart miteinander kommunizieren, daß bei einem ersten Fluidströmungsweg entlang seiner Länge eine Reihe von beabstandeten Grenzflächenbereichen (210) mit den zweiten Fluidströmungswegen angeordnet ist und umgekehrt.

**52.** Verfahren nach Anspruch 50, umfassend das Bereitstellen des ersten und zweiten Fluidströmungswegs derart, daß der genannte zweite Fluidströmungsweg eine zickzackförmige, eine sinusförmige oder eine wellenförmige Struktur (190) aufweist, um mit dem genannten ersten Fluidströmungsweg (192) eine Reihe von Grenzflächenbereichen (1941, 1942, 194n) entlang der ersten Fluidströmungswege zu bilden.

**Revendications**

**1.** Appareil permettant la réalisation d'un procédé de transfert diffusif entre un premier et un second fluides non-miscibles, ledit appareil comprenant une première et une seconde trajectoires d'écoulement (11, 12, 31, 33, 50, 52, 103, 104, 111, 115, 138, 140, 154, 158, 172, 174, 176, 190, 192, 202, 204, 224, 226) pour permettre ainsi l'écoulement fluide laminaire respectivement des premier et second fluides non-miscibles, les parties des trajectoires d'écoulement étant disposées adjacentes les unes aux autres et communicantes les unes avec les autres dans une région (16, 105, 119, 120, 121, 142, 156, 1941, 1942, 194n, 210, 236) qui est telle qu'elle permet au fluide de former une interface ouverte stable (40, 57, 144, 180) dedans, **caractérisé en ce qu'**au moins la première trajectoire d'écoulement dans la région d'interface a une largeur normale à l'interface comprise entre 10 et 500 micromètres, et **en ce que** les régions desdites première et seconde trajectoires d'écoulement à l'extérieur de ladite région d'interface sont séparées (15, 17, 117, 118) pour permettre l'écoulement, respectivement des premier et second fluides dedans et hors de la région d'interface sans mélange.

**2.** Appareil selon la revendication 1, **caractérisé en ce que** ladite première trajectoire d'écoulement fluide a une largeur normale à l'interface comprise entre 10 et 500 micromètres.

**3.** Appareil pour la réalisation d'un procédé de transfert diffusif d'une entité à partir d'un premier vers un second fluide non miscible avec le premier, ledit appareil comprenant des première et seconde trajectoires d'écoulement (11, 12, 31, 33, 50, 52, 103, 104, 111, 115, 138, 140, 154, 158, 172, 174, 176, 190, 192, 202, 204, 224, 226) pour permettre ainsi l'écoulement fluide laminaire, respectivement, des premier et second fluides non miscibles, des parties de canaux étant disposées adjacentes les unes avec les autres et communicantes les unes avec les autres dans une région (16, 105, 119, 120, 121, 142, 156, 1971, 1942, 194n, 210, 236) qui est telle qu'elle permet au fluide de former une interface ouverte stable (40, 57, 144, 180) dedans, **caractérisé en ce que** la largeur (l) d'au moins la première trajectoire d'écoulement adjacente à ladite région d'interface et normale à l'interface est déterminée par l'inégalité :

$$L^2 < D\, t\, x^{-1}$$

où D est le coefficient de diffusion de l'entité de transfert à l'intérieur du premier fluide, t est une période de temps comprise entre 0,1 et 100 secondes pour les parties fluides occupant une position dans la région d'interface, et x est une constante numérique ayant une valeur de 0,005 ou plus,
et **caractérisé en ce que** les régions desdites première et seconde trajectoires d'écoulement hors de ladite région d'interface sont séparées (15, 17, 117, 118) pour permettre l'écoulement, respectivement, des premier et second fluides dans et hors de la région d'interface sans mélange.

4. Appareil selon la revendication 3, **caractérisé en ce que** la largeur (l) de ladite seconde trajectoire d'écoulement adjacente à ladite région d'interface et normale à l'interface est déterminée par l'inégalité de :

$$L^2 < D\, t\, x^{-1}$$

où D est le coefficient de diffusion de l'entité de transfert à l'intérieur du second fluide, t est une période de temps comprise entre 0,1 et 100 secondes pour les parties fluides occupant une position dans la région d'interface, et x est une constante numérique ayant une valeur de 0,005 ou plus,

5. Appareil selon la revendication 3 ou 4, **caractérisé en ce que** x a la valeur de 0,01 ou plus.

6. Appareil selon la revendication 3 ou 4, **caractérisé en ce que** x a la valeur de 0,1 ou plus.

7. Appareil selon l'une des revendications 3 à 6, **caractérisé en ce que** ledit coefficient de diffusion D a une valeur comprise entre $10^{-13}$ et $10^{-9}$ m²s⁻¹.

8. Appareil selon la revendication 7, **caractérisé en ce que** ledit coefficient de diffusion D a une valeur comprise entre $10^{-11}$ et $10^{-10}$ m²s⁻¹.

9. Appareil selon l'une des revendications précédentes, **caractérisé en ce que** la hauteur de ladite région d'interface dans une direction normale à l'écoulement fluide est comprise entre 5 et 200 micromètres.

10. Appareil selon la revendication 9, **caractérisé en ce que** la hauteur de ladite région d'interface est comprise entre 5 et 30 micromètres.

11. Appareil selon l'une des revendications précédentes, **caractérisé en ce que** ladite interface a une hauteur dans une direction normale à l'écoulement fluide égale, ou pas inférieure, à un vingtième de la dimension de hauteur des trajectoires d'écoulement adjacentes.

12. Appareil selon l'une des revendications précédentes, **caractérisé en ce que** les surfaces desdites première et seconde trajectoires d'écoulement sont réalisées à partir de matériaux différents (32, 47, 49, 113, 123) avec des propriétés différentes de mouillage pour la stabilisation de l'interface pour une gamme de pressions différentielles entre lesdits premier et second fluides à travers ladite interface.

13. Appareil selon l'une des revendications précédentes, **caractérisé en ce que** les surfaces des trajectoires d'écoulement dans ladite région d'interface sont sinueuses (18, 19), adjacentes à une position désirée de l'interface pour permettre la stabilisation de l'interface pour une gamme de pressions différentielles à travers l'interface entre lesdits deux fluides.

14. Appareil selon l'une des revendications précédentes, **caractérisé en ce que** lesdites première et seconde trajectoires d'écoulement sont gravées ou sinon formées comme des rainures dans la surface d'un substrat commun (13, 70), et un élément de plaque (14, 80) est fixé sur la surface du substrat pour définir avec les rainures lesdites première et seconde trajectoires d'écoulement.

15. Appareil selon l'une des revendications 1 à 13 incluant les premier et second éléments substrats (13, 34, 100, 102, 112, 114, 162, 164) ayant des surfaces opposées où lesdites première et seconde trajectoires d'écoulement sont formées.

16. Appareil selon la revendication 15, **caractérisé en ce que** ladite première trajectoire d'écoulement (103) est formée comme une rainure ou un évidement dans la surface dudit premier élément substrat (100) et, **en ce que** ladite seconde trajectoire d'écoulement (104) est formée comme une rainure ou un évidement dans la surface dudit second élément substrat (102), lesdites surfaces étant placées les unes contre les autres et lesdites trajectoires d'écoulement étant au moins partiellement superposées pour définir la région d'interface.

17. Appareil selon la revendication 16, **caractérisé en**

**ce que** lesdites rainures ou évidements formant lesdites première et seconde trajectoires d'écoulement sont partiellement décalées les unes par rapport aux autres pour définir une région d'interface de dimension plus petite que celles desdites rainures ou évidements.

18. Appareil selon la revendication 15, **caractérisé en ce que** lesdits premier et second éléments substrats (160, 162) sont disposés parallèlement les uns par rapport aux autres et espacés d'une distance prédéterminée et incluent respectivement des première et seconde batteries d'ouverture (164, 166), les ouvertures des batteries coïncidant les unes par rapport aux autres de manière à définir les premières trajectoires d'écoulement (172, 174) s'étendant entre les ouvertures coïncidantes et une seconde trajectoire d'écoulement fluide (176) s'étendant entre et parallèlement aux dits éléments substrats.

19. Appareil selon l'une des revendications précédentes, **caractérisé en ce que** ladite seconde trajectoire d'écoulement fluide est formée de manière à ce qu'il existe dans la région d'interface plus d'une zone interfaciale entre lesdits premier et second fluides (142, 180) et, **en ce que** la largeur de ladite première trajectoire d'écoulement fluide dans la région d'interface est telle qu'aucune desdites premières trajectoires d'écoulement de fluides ne se situe plus loin que (i) entre 10 et 50 micromètres de la zone interfaciale la plus proche dans une direction normale à celle-ci, ou (ii) une distance (I) déterminée par l'inégalité $I^2 < D t x^{-1}$, à partir de la zone interfaciale la plus proche dans une direction normale à celle-ci, où les symboles ont les mêmes significations comme décrites précédemment.

20. Appareil selon l'une des revendications précédentes, **caractérisé en ce qu'**une troisième trajectoire d'écoulement (140) est prévue pour porter un troisième fluide, et une ou plusieurs régions d'interface (142) sont prévues pour fournir des interfaces choisies entre le premier et/ou second et/ou troisième fluides.

21. Appareil selon la revendication 20, **caractérisé en ce que** la troisième trajectoire d'écoulement fluide est sujette aussi bien aux mêmes limitations qu'aux mêmes dimensions que les première et/ou seconde trajectoires d'écoulement fluide.

22. Appareil selon l'une des revendications précédentes incluant des moyens électrodes (a, b, c), montés dans ou adjacents aux trajectoires d'écoulement, pour permettre la détection, l'enregistrement et/ou l'application de champs électriques, magnétiques ou électromagnétiques à un ou plusieurs fluides.

23. Un système permettant le traitement de quantités de premier et second fluides non miscibles incluant une multitude d'éléments de traitement (194n, 210, 220), chaque élément de traitement comprenant un appareil comme exposé dans l'une des revendications précédentes.

24. Un système selon la revendication 23 incluant des moyens de distribution (240) pour distribuer du fluide vers et à partir des entrées et des sorties de chaque élément de traitement.

25. Un système comme revendiqué dans la revendication 24 dans lequel lesdits éléments de traitement sont fabriqués sur une série de substrats empilés (222), les première et seconde trajectoires d'écoulement (224, 226) de chaque élément de traitement communiquant avec les ports fluides (240) qui s'étendent à travers l'empilement.

26. Un système selon la revendication 23 incluant un premier jeu de premières trajectoires d'écoulement fluide (222) et un second jeu de secondes trajectoires d'écoulement fluide (204), **caractérisé en ce que** les trajectoires d'écoulement des jeux intercommuniquent de façon à ce que, pour la première trajectoire d'écoulement fluide, il est prévu le long de sa longueur une série de régions d'interfaces espacées (210) avec les secondes trajectoires d'écoulement fluides, et vice versa.

27. Un système selon la revendication 26 incluant des premier et second substrats superposés (206, 208), avec le premier jeu de trajectoires d'écoulement fluide étant formé dans la surface d'un substrat et le second jeu de trajectoire d'écoulement fluide étant formé dans une face en contact avec le second substrat.

28. Un système selon la revendication 23, **caractérisé en ce qu'**une seconde trajectoire d'écoulement fluide a une configuration en zigzag, sinueuse ou enroulée (190), de manière à définir avec une première trajectoire d'écoulement fluide (192) une série de régions d'interface(1941, 1942, 194n) le long de la longueur de ladite première trajectoire d'écoulement fluide.

29. Une méthode permettant la réalisation d'un procédé de transfert diffusif entre des premier et second fluides non miscibles, ladite méthode comprenant :

   1) La fourniture de première et seconde trajectoires d'écoulement (11, 12, 31, 33, 50, 52, 103, 104, 111, 115, 138, 140, 154, 158, 172, 174, 176, 190, 192, 202, 204, 224, 226) ayant des parties disposées adjacentes les unes par rapport aux autres et communicantes les unes avec les autres dans une région (16, 105, 119, 120, 121, 142, 156, 1941, 1942, 194n, 210, 236) dans laquelle les fluides peuvent être mis en contact les uns avec les autres et en ce qu'au moins la première trajectoire d'écoulement dans la région d'interface a une largeur normale à l'interface compris entre 10 et 500 micromètres ;

2) L'écoulement des premier et second fluides non miscibles à travers, respectivement, lesdites première et seconde trajectoires d'écoulement de manière à ce que, au moins dans ladite région, l'écoulement des deux fluides est essentiellement laminaire et, une interface ouverte stable (40, 57, 144, 180) est formée entre les fluides ;

3) L'autorisation de transfert d'au moins 1% de la quantité totale d'au moins une entité diffusive à ladite interface entre les deux fluides ;et

4) L'écoulement des fluides dans et hors de (15, 17, 117, 118), la région interface dans leur trajectoires d'écoulement respectives sans mélange des fluides.

30. Une méthode de réalisation d'un procédé de transfert d'au moins une entité diffusive à partir d'un premier fluide vers un second fluide non miscible avec le premier, la méthode comprenant :

1) La fourniture de première et seconde trajectoires d'écoulement (11, 12, 31, 33, 50, 52, 103, 104, 111, 115, 138, 140, 154, 158, 172, 174, 176, 190, 192, 202, 204, 224, 226) ayant des parties disposées adjacentes les unes par rapport aux autres et communicantes les unes avec les autres dans une région (16, 105, 119, 120, 121, 142, 156, 1941, 1942, 194n, 210, 236) dans laquelle les fluides peuvent être mis en contact les uns avec les autres ;

2) L'écoulement des premier et second fluides à travers respectivement lesdites première et seconde trajectoires d'écoulement de manière à ce que, au moins dans ladite région, l'écoulement des deux fluides est essentiellement laminaire et, une interface ouverte stable (40, 57, 144, 180) est formée entre les fluides ;

3) **Caractérisée en ce qu'**au moins 1% de la quantité totale d'une entité diffusive, qui peut être transférée à partir du premier fluide à travers l'interface, est transférée vers le second fluide et l'équation suivante s'applique :

$$I^2 < Dtx^{-1}$$

où D est le coefficient de diffusion de l'entité diffusive à l'intérieur du premier fluide, t est une période de temps entre 0,1 et 100 secondes durant laquelle une partie dudit premier fluide occupe une position dans la région d'interface, I est la largeur de la première trajectoire d'écoulement adjacente à ladite région d'interface et normale à l'interface, et x est une constante numérique ayant une valeur de 0,005 ou plus, et

4) L'écoulement des fluides dans et hors de (15, 17, 117, 118), la région interface dans leur trajectoires d'écoulement respectives sans mélange des fluides.

31. Une méthode comme revendiquée dans la revendication 30, **caractérisée en ce que** pour ledit second fluide et ladite trajectoire d'écoulement fluide, l'inéquation suivante s'applique :

$$I^2 < Dtx^{-1}$$

où D est le coefficient de diffusion de l'entité diffusive et I est la largeur de la seconde trajectoire d'écoulement adjacente à ladite région d'interface et normale à l'interface.

32. Une méthode comme revendiquée dans la revendication 30 ou 31, **caractérisée en ce que** la valeur de x est 0,01, ou plus.

33. Une méthode comme revendiquée dans la revendication 30 ou 31, **caractérisée en ce que** la valeur de x est 0,1, ou plus.

34. Une méthode selon l'une des revendications 30 à 33, **caractérisé en ce que** ledit coefficient de diffusion D a une valeur comprise entre $10^{-13}$ et $10^{-9} m^2 s^{-1}$.

35. Une méthode selon la revendication 34 **caractérisée en ce que** ledit coefficient de diffusion D a une valeur comprise entre $10^{-11}$ et $10^{-10} m^2 s^{-1}$.

36. Une méthode selon la revendication 29, **caractérisée en ce que** ladite seconde trajectoire d'écoulement est formée en ayant une largeur dans la région de l'interface et normale à l'interface comprise entre 10 et 500 micromètres.

37. Une méthode selon l'une des revendications 30 à 36, **caractérisée en ce que** ladite seconde trajectoire d'écoulement est formée de manière à ce que, dans la région d'interface, plus d'une zone interfaciale (142, 180) est formée avec la première trajectoire d'écoulement fluide, et **en ce que** la largeur de la première trajectoire d'écoulement fluide dans la région interfaciale est telle qu'aucune partie de la première trajectoire d'écoulement fluide n'est située plus loin que d'une région interfaciale d' : (i) une distance comprise entre 10 et 500 micromètres, ou (ii) une distance (I) déterminée par l'inégalité précédemment citée.

38. Une méthode selon l'une des revendications 29 à 37 incluant une troisième trajectoire d'écoulement fluide (140) et fournissant des régions d'interface choisies (142) entre les première, seconde et/ou troisième trajectoires d'écoulement fluide et permettant l'écoulement d'un troisième fluide à travers ladite trajectoire d'écoulement fluide pour former des interfaces choisies entre les premier, second et troisième fluides pour permettre la diffusion à travers au moins une entité choisie.

39. Une méthode comme revendiquée dans l'une des revendications 29 à 38, **caractérisée en ce que** les-fluides sont choisis parmi les gaz, les fluides supercritiques ou les liquides, les fluides choisis étant mutuellement non miscibles.

40. Une méthode comme revendiquée dans la revendication 39, **caractérisée en ce que** les premier, second, et troisième fluides sont chacun des liquides.

41. Une méthode comme revendiquée dans l'une des revendications 29 à 40, **caractérisée en ce que** le premier fluide est une solution liquide aqueuse et le second fluide est un liquide organique, ou vice versa.

42. Une méthode comme revendiquée dans la revendication 41, **caractérisée en ce que** le procédé est une extraction de solvant d'au moins un soluté à partir de la solution aqueuse vers le liquide organique, ou vice versa.

43. Une méthode comme revendiquée dans l'une des revendications 29 à 42, **caractérisée en ce qu'**un ou plusieurs fluides sont détectés ou suivis par des moyens d'électrodes dans ou adjacents aux trajectoires d'écoulement.

44. Une méthode comme revendiquée dans l'une des revendications 30 à 45 incluant l'application de champs électriques, magnétiques ou électromagnétiques à un ou plusieurs fluides.

45. Une méthode comme revendiquée dans l'une des revendications 29 à 44, **caractérisée en ce que** ladite région d'interface est formée en ayant une hauteur dans une direction normale à la trajectoire d'écoulement comprise entre 5 et 200 micromètres.

46. Une méthode selon la revendication 45, **caractérisée en ce que** la hauteur de ladite région d'interface est comprise entre 5 et 30 micromètres.

47. Une méthode comme revendiquée dans l'une des revendications 29 à 46, **caractérisée en ce que** ladite interface est formée en ayant une hauteur dans une direction normale à l'écoulement fluide égale, ou pas inférieure, à un vingtième de la dimension de hauteur des trajectoires d'écoulement adjacentes.

48. Une méthode comme revendiquée dans l'une des revendications 29 à 47, **caractérisée en ce que** des surfaces desdites première et seconde trajectoires d'écoulement sont prévues, lesdites surfaces comprenant différents matériaux (32, 47, 49, 113, 123) avec différentes propriétés de mouillage pour la stabilisation de l'interface pour une gamme de pressions différentielles entre lesdits premier et second fluides le long de ladite interface.

49. Une méthode comme revendiquée dans l'une des revendications 29 à 48, **caractérisée en ce que** des surfaces des trajectoires d'écoulement (18, 19) sont prévues dans ladite région d'interface, lesdites surfaces étant sinueuses, adjacentes d'une position désirée de l'interface pour la stabilisation de l'interface pour une gamme de pressions différentielles à travers l'interface entre lesdits deux fluides.

50. Une méthode comme revendiquée dans l'une des revendications 29 à 49, **caractérisée en ce qu'**une multitude d'éléments de traitement (194n, 210, 220) est prévue, chaque élément de traitement comprenant une région d'interface, ladite méthode facilitant le traitement simultané des fluides à l'intérieur de chaque élément de traitement.

51. Une méthode selon la revendication 50 comprenant la fourniture d'un premier jeu de premières trajectoires d'écoulement fluide (202) et un second jeu de secondes trajectoires d'écoulement fluide (204), **caractérisée en ce que** les trajectoires d'écoulement des jeux intercommuniquent de manière à ce que, pour une première trajectoire d'écoulement fluide, il est disposé le long de sa longueur une série de régions d'interface espacées (210) avec les secondes trajectoires d'écoulement fluides, et vice versa.

52. Une méthode selon la revendication 50 comprenant la fourniture des première et seconde trajectoire d'écoulement fluide de manière à ce que ladite seconde trajectoires d'écoulement fluide a une configuration en zigzag, sinueuse, ou enroulée (190) de manière à définir avec ladite première trajectoire d'écoulement fluide (192) une série de régions d'interface (1941, 1942, 194n) le long de la longueur de ladite première trajectoire d'écoulement fluide.

**Figure1b**

**Figure1a**

**Figure 2b**

**Figure 2a**

Figure 4

**Figure 5**

**Figure 6**

Figure 7

Figure 7a

Figure 8

Figure 8a

104

102

103

100

101

103

105

104

Figure 8b

Figure 9b

Figure 9a

Figure 9

Figure 10

Fig 11a

Fig 11b

Figure 11c

154   156

Figure 11d

158

154   154

150

152

Figure 11

## Figure 11e

160
164
172
176
162
174
166

## Figure 11f

180 178 180 178 180

## Figure 11

**Figure 12**

1941

1942

192

190

194n

EP 0 790 849 B1

Figure 13a

Figure 13b

Figure 13

37

Figure 14